Europäisches Patentamt

European Patent Office

Office européen des brevets

(19)

(11) **EP 1 271 175 B1**

(12) **EUROPÄISCHE PATENTSCHRIFT**

(45) Veröffentlichungstag und Bekanntmachung des Hinweises auf die Patenterteilung:
**17.11.2004  Patentblatt 2004/47**

(51) Int Cl.$^7$: **G01S 3/808**, G01S 3/802, G01S 5/22

(21) Anmeldenummer: **02013552.1**

(22) Anmeldetag: **19.06.2002**

(54) **Verfahren zum Bestimmen der Zielposition eines schallabstrahlenden Ziels**

Method for determining the position of a sound emitting target

Procédé pour déterminer la position d'une cible émettant du son

(84) Benannte Vertragsstaaten:
**AT BE CH CY DE DK ES FI FR GB GR IE IT LI LU MC NL PT SE TR**

(30) Priorität: **22.06.2001  DE 10130297**

(43) Veröffentlichungstag der Anmeldung:
**02.01.2003  Patentblatt 2003/01**

(73) Patentinhaber: **ATLAS ELEKTRONIK GmbH**
**28305 Bremen (DE)**

(72) Erfinder:
• **Arens, Egidius**
**28832 Achim (DE)**
• **Nirmaier, Thomas**
**69198 Schriesheim (DE)**
• **Meyer, Ralf**
**28215 Bremen (DE)**

(56) Entgegenhaltungen:
EP-A- 0 412 248          DE-C- 3 705 695
US-A- 4 312 053

• EL-HAWARY F ET AL: "UNDERWATER TARGET TRACKING VIA THE IRWLS FILTERING APPROACH" IEE PROCEEDINGS F. COMMUNICATIONS, RADAR & SIGNAL PROCESSING, INSTITUTION OF ELECTRICAL ENGINEERS. STEVENAGE, GB, Bd. 138, Nr. 5, 1. Oktober 1991 (1991-10-01), Seiten 459-469, XP000265693 ISSN: 0956-375X

• BLANC-BENON P ET AL: "Passive target motion analysis using multipath differential time-delay and differential Doppler shifts" ACOUSTICS, SPEECH, AND SIGNAL PROCESSING, 1995. ICASSP-95., 1995 INTERNATIONAL CONFERENCE ON DETROIT, MI, USA 9-12 MAY 1995, NEW YORK, NY, USA,IEEE, US, 9. Mai 1995 (1995-05-09), Seiten 3139-3142, XP010152010 ISBN: 0-7803-2431-5

• JEFFERS R ET AL: 'Passive range estimation and range rate detection' PROCEEDINGS OF THE 2000 IEEE SENSOR ARRAY AND MULTICHANNEL SIGNAL PROCESSING WORKSHOP. SAM 2000 (CAT. NO.00EX410), PROCEEDINGS OF THE 2000 IEEE SENSOR ARRAY AND MULTICHANNEL SIGNAL PROCESSING WORKSHOP, CAMBRIDGE, MA, USA, 16-17 MARCH 2000 PISCATAWAY, NJ, USA, IEEE, USA, Seiten 112 - 116, XP002215184 ISBN: 0-7803-6339-6

• WESTWOOD E K: "BROADBAND MATCHED-FIELD SOURCE LOCALIZATION" JOURNAL OF THE ACOUSTICAL SOCIETY OF AMERICA, AMERICAN INSTITUTE OF PHYSICS. NEW YORK, US, Bd. 91, Nr. 5, 1. Mai 1992 (1992-05-01), Seiten 2777-2789, XP000269356 ISSN: 0001-4966

**Beschreibung**

Die Erfindung betrifft ein Verfahren zum Bestimmen der Zielposition eines Schall ins Wasser abstrahlenden Ziels der im Oberbegriff des Anspruchs 1 definierten Gattung.

Bei einem bekannten Verfahren dieser Art (DE 37 05 695 C1) wird der mit kleinen elektroakustischen Wandlern, dort Sensoren genannt, ausgestattete Schallempfänger, dort Sonarempfänger genannt, in einer ersten Wassertiefe angeordnet und ein erster Näherungswert der Laufdifferenzen des Schalls zwischen dem direkten Ausbreitungsweg und einem indirekten Ausbreitungsweg mit Oberflächenreflexion zu einer ersten Zeit bestimmt. Anschließend bewegt sich der Schallempfänger mit einer Geschwindigkeit in eine zweite Wassertiefe und ein zweiter Näherungswert der Laufzeitdifferenz des Schalls zwischen dem direkten Ausbreitungsweg und einem indirekten Ausbreitungsweg mit Oberflächenreflexion zu einer zweiten Zeit bestimmt. Auf der Grundlage der beiden Näherungswerte für die Laufzeitdifferenzen, einem Näherungswert für die Geschwindigkeit des Schallempfängers und dem Zeitintervall zwischen erster und zweiter Zeit wird ein Näherungswert für die Zielentfernung geschätzt und daraus ein Näherungswert für die Zieltiefe abgeleitet.

Bei einem unter dem Begriff "Pingstealing" bekannten Verfahren, das ein aktiv Schallimpulse abstrahlendes Ziel - wie es z.B. ein aktiv ortendes Torpedosonar eines Torpedos darstellt - voraussetzt (US 4 312 053), wird mittels eines getauchten Schallempfängers der Einfallswinkel der akustischen Energie innerhalb eines Schallimpulses als Funktion der Zeit gemessen. Diese Daten werden dann in Mehrwege-Einfallswinkel und Mehrwege-Laufzeitdifferenzen umgesetzt und damit ein mathematisches Gleichungssystem zur Berechnung der Zielentfernung und Zieltiefe gelöst.

Bei einem bekannten Verfahren zur Bestimmung von Zielposition und Zielgeschwindigkeit eines schallabstrahlenden Ziels, hier Unterwasser-Zieltracking genannt, werden Zeitverzögerungen der von einem zielfernen Beobachter empfangenen Schallsignale und deren zeitliche Veränderung dazu benutzt, um die Zielposition und Zielgeschwindigkeit zu schätzen. Hierzu wird ein lineares Messmodell (measurement model) verwendet, das aus einem Zustand-Raummodell (state space model) und aus einem Zielortmodell (target location model), das den geometrischen Zusammenhang von Zielentfernung und zwei gemessenen Zeitverzögerungsdifferenzen zwischen dem direkten Ausbreitungsweg des Schalls einerseits und einem indirekten Ausbreitungsweg des Schalls mit einer Reflexion an der Wasseroberfläche bzw. an dem Wasserboden andererseits herstellt, gebildet wird. Über ein Zeitserienmodell (time series model), das die beiden gemessenen Zeitverzögerungsdifferenzen verkörpert, wird das Messmodell (measurement model) einer robusten Schätzung auf Basis des gewichteten kleinsten Fehlerquadrats unterzogen. (El-Hawary F. et al "underwater target tracking via the irwls filtering approach" IEEE PROCEEDINGS F. COMMUNICATIONS RADAR & SIGNAL PROCESSING INSTITUTION OF ELECTRICAL ENGINEERS STEVENAGE, GB, Bd. 138, Nr. 5, 1. Oktober 1991 (1991-10-01), Seiten 459 - 469, XP000265693 ISSN: 0956-375X).

Bei einem bekannten Verfahren zur Bestimmung von Zieldaten eines wellenenergieabstrahlenden Fahrzeugs (EP 0 412 248 A2) werden zur zeitlichen Verkürzung der Zieldatenbestimmung die Empfangssignale des am Messort befindlichen Wandlers oder die Gruppensignale einer Empfangsbasis mit Richtungsbildner für die Peilung in Frequenzspektren gewandelt und mit vorher für die Zieldaten berechneten oder gemessenen Modellparametern der Übertragungsschicht im Übertragungsmedium verglichen. Zur Entfernungsbestimmung wird jedes Frequenzspektrum mit den frequenz- und entfernungsabhängigen Übertragungsfunktionen als Modellparameter auf Übereinstimmung verglichen. Für die Geschwindigkeitsbestimmung werden frequenz- und geschwindigkeitsabhängige Interferenzfrequenzen als Modellparameter mit einer aus dem Frequenzspektrum bestimmten Periodizität des zeitlichen Verlaufs der je Frequenzspur abgespeicherten Intensitäten auf Übereinstimmung verglichen.

Bei einem sog. TMA-Verfahren (Target Motion Analysis), das eine Basisfunktion für jede Passiv-Sonaranlage bildet, werden ausschließlich gemessene Peilwinkel und Frequenzmessung zur Bestimmung von Entfernung und Position eines schallabstrahlenden Ziels benutzt. Ein verbesserter TMA-Schätzer benutzt gemeinsam Peilungen und die Mehrwegeausbreitungsparameter: Zeitverzögerungsdifferenzen und Dopplerverschiebungen. (P. Blanc-Benon et al "Passive target motion anlaysis using multipath differential timedelay and differential Doppler shift" 1995 INTERNATIONAL CONFERENCE ON ACOUSTICS, SPEECH, AND SIGNAL PROCESSING CONFERENCE PROCEEDINGS (CAT. NO95CH35732), 1995 INTERNATIONAL CONFERENCE ON ACOUSTICS, SPEECH AND SIGNAL PROCESSING DETROIT, MI, USA, 9-12 MAY 1995, Seiten 3139-3142 vol.5, XP010152010, 1995 New York, NY, USA, IEEE, USA ISBN: 0-7803-2431-5).

Ein bekanntes Verfahren zur passiven Schätzung der Entfernung eines schallabstrahlenden Ziels macht ebenfalls von dem Phänomen der Mehrwegeausbreitung des Schalls Gebrauch. Zur Bestimmung der Laufzeitdifferenzen zwischen den einzelnen Schallausbreitungswegen wird eine Ceptralanalyse auf die Empfangssignale angewendet. (Jeffers et al "Passive range estimation and range rate detection" PROCEEDINGS OF THE 2000 IEEE SENSOR ARRAY AND MULTICHANNEL SIGNAL PROCESSING WORKSHOP. SAM (CAT. NO00EX410), PROCEEDINGS OF THE 2000 IEEE SENSOR ARRAY AND MULTICHANNEL SIGNAL PROCESSING WORKSHOP, CAMBRIDGE, MA, USA,16-17 MARCH 2000, Seiten 112 - 116, XP002215184 2000, Piscataway, NJ, USA, IEEE, USA ISBN: 0-7803-6339-6).

Bei einem ebenfalls bekannten Verfahren zur Bestimmung der Zielposition eines schallabstrahlenden Ziels mit zwei Schallempfängern am Messort werden gemessene Kreuzspektren gebildet und mit modellierten Kreuzspektren für eine Vielzahl von angenommenen Zielpositionen kreuzkorreliert. Die Amplitude der Kreuzkorrelationsfunktion wird maximal, wenn die für die Modellierung angenommenen Zielpositionen mit der tatsächlichen Zielposition übereinstimmt. (Westwood E. K. "Broadband matched-field source localization" JOURNAL OF THE ACOUSTICAL SOCIENTY OF AMERICA, AMERCAN INSTITUTE OF PHYSICS. NEW YORK, US, Bd. 91, Nr. 5, 1.Mai 1992(1992-05-01), Seiten 2777-2789, XP000269356 ISSN:0001-4966).

Der Erfindung liegt die Aufgabe zugrunde, ein Verfahren der eingangs genannten Art zu schaffen, das auch mit vom Ziel breitbandig abgestrahlter akustischer Energie, wie z.B. Antriebsgeräusche eines sich bewegenden Ziels, ohne zusätzliche Bedingungen, wie z.B. eine Horizontal- und Vertikalbewegung des Schallempfängers, insbesondere in Flachwassergebieten sehr genaue Ergebnisse bei der Zielvermessung liefert.
Die Aufgabe ist erfindungsgemäß durch die Merkmale im Anspruch 1 gelöst.

Das erfindungsgemäße Verfahren hat den Vorteil, daß durch die Bildung der Gruppensignale zum Zwecke eines richtungsabhängigen Anhebens des Nutz-Stör-Verhältnisses (SNR) und durch die Auswertung der in den Gruppensignalen enthaltenen Laufzeitdifferenzen zwischen unterschiedlichen Ausbreitungswegen mittels Vergleich mit einer Modellannahme der Schallausbreitung auch bei geringen Wassertiefen die Zielposition aufgrund der vom Ziel abgestrahlten Geräusche zuverlässig genau bestimmt wird. Bereits mit einfachen geometrischen Ausbreitungsmodellen für den Schall kann die Zielposition mit sehr hoher Wahrscheinlichkeit bestimmt werden. Mit der Kenntnis der Zieltiefe läßt sich darüber hinaus der azimutale Peilwinkel des Ziels mit einem berechenbaren Elevationswinkel des Schalleinfalls korrigieren und so das Toleranzgebiet der Zielposition einengen. Das Verfahren ist auch in der Lage, ein Ziel zu detektieren und die Zielpeilung zu bestimmen, wenn die richtungsselektive Bildung der Gruppensignale kontinuierlich über den gesamten Azimut durchgeführt wird und auf alle Gruppensignale die erfindungsgemäße Signalverarbeitung angewandt wird. Selbstverständlich ist das Verfahren auch bei Zielen anwendbar, die aktiv Schallimpulse senden.

Zweckmäßige Ausführungsformen des erfindungsgemäßen Verfahrens mit vorteilhaften Weiterbildungen und Ausgestaltungen der Erfindung ergeben sich aus den weiteren Ansprüchen.

Der Abgleich zwischen Modell und Messung kann auf verschiedenen Ebenen stattfinden, wobei der Grad der Übereinstimmung ein Maß für die Aufenthaltswahrscheinlichkeit des Ziels in der angenommenen Zielposition ist, die durch Peilung, Entfernung und Zieltiefe kennzeichnend ist.

Bei einer bevorzugten Ausführungsform der Erfindung wird ein direkter Vergleich der Modell- und Meß-Laufzeitdifferenzen durchgeführt, indem als Kriterium die Summe der minimalen Abstandsquadrate der Modell-Laufzeitdifferenzen zu ihren nächsten Nachbarn in der Menge der Meß-Laufzeitdifferenzen verwendet wird. Der vorgegebene Grad der Übereinstimmung ist dann erreicht, wenn die Summe dieser minimalen Abstandsquadrate innerhalb eines Konfidenzintervalls liegt.

Gemäß einer vorteilhaften Ausführungsform der Erfindung werden dabei die minimalen Abstandsquadrate vor Summenbildung mit einem Wichtungsfaktor $w_i$ multipliziert, wobei als Wichtungsfaktor $w_i$ eine Potenz der Anzahl $n_B, n_O$ mit den Reflexionsfaktoren $R_O$ im Ausbreitungsweg i gemäß

$$w_i = R_B^{n_B} \cdot R_O^{n_O} \tag{1}$$

benutzt wird. Der Reflexionsfaktor $R_B$ am Boden B und der Reflexionsfaktor an der Oberfläche O eines durch Boden B und Oberfläche O begrenzten Schallkanals wird plausibel zwischen 0 und 1 gewählt. Durch diese Wichtung wirken sich stark gedämpfte und nicht identifizierbare Meß-Laufzeitdifferenzen höherer Ordnung nicht verfälschend auf die Aufenthaltswahrscheinlichkeit aus.

Die Identifizierung der Laufzeitdifferenzen in jedem aus den elektrischen Ausgangssignalen von i elektrischen Wandlern gebildeten Gruppensignal, kann nach verschiedenen Methoden erfolgen. Die Gruppensignale, auch Beams genannt, werden durch kohärente Überlagerung der entsprechend der Einfallsrichtung des Schalls laufzeitverzögerten Ausgangssignale gebildet.

Gemäß einer vorteilhaften Ausführungsform der Erfindung wird zur Laufzeitanalyse die Autokorrelationsfunktion des Gruppensignals gemessen, und die Meß-Laufzeitdifferenzen für die unterschiedlichen Ausbreitungswege werden zu vorgebbaren Meßzeitpunkten durch Auswertung der Maxima der Autokorrelationsfunktion gewonnen. Zwischen zwei Meßzeitpunkten liegt ein Zeitintervall, innerhalb dessen sich das Ziel weiterbewegt hat. Da die Autokorrelationsfunktion eines breitbandigen Signals mit der Bandbreite B Nebenmaxima mit abnehmender Amplitude im Abstand $\Delta t = 1/B$ besitzt, lassen sich in der Autokorrelationsfunktion benachbarte Hauptmaxima, die die Meß-Laufzeitdifferenzen kennzeichnen, nur dann voneinander trennen, wenn die Amplituden der Nebenmaxima ausreichend schnell abfallen, was bedingt, daß das Signal geeignet breitbandig sein muß.

Gemäß einer bevorzugten Ausführungsform der Erfindung wird die Identifizierung der im Gruppensignal enthaltenen Laufzeitdifferenzen mittels einer Cepstralanalyse vorgenommen. Das reelle Cepstrum ist definiert als Fouriertransformierte des Logarithmus des Absolutwerts des Autospektrums eines Signals

$$C(t) = \frac{1}{2\pi} \int_{-\pi}^{\pi} \log \left| X(e^{i\omega}) \right| e^{i\omega} d\omega \qquad (2)$$

wobei $X(e^{i\omega t})$ die Fouriertransformierte des Signals darstellt. Zur Definition des Autospektrums vgl. [2], Seite 50 ff. Die im Autospektrum enthaltenen Laufzeitdifferenzen lassen sich in der Fouriertransformierten des Spektrums, also im Cepstrum, anhand der dort auftretenden Maxima identifizieren. Zur Identifizierung der Maxima spielen die Längen der Fouriertransformation für das Autospektrum und dessen Fouriertransformierten eine entscheidende Rolle. Die Länge des Autospektrums soll daher möglichst groß sein, darf aber die zeitliche Kohärenzlänge des Signals nicht überschreiten, da dann die Maxima im Cepstrum wieder verschwinden.

Gemäß einer alternativen Ausführungsform der Erfindung kann bei der Identifizierung der im Gruppensignal enthaltenen Laufzeitdifferenzen durch Bestimmung des Cepstrums des Gruppensignals der Vergleich der Modell-Laufzeitdifferenzen mit den Meß-Laufzeitdifferenzen in der Weise vorgenommen werden, daß mit den Modell-Laufzeitdifferenzen ein Modell-Cepstrum gebildet wird und Modell-Cepstrum und gemessenes Cepstrum unmittelbar miteinander verglichen werden.

Als Modelle für die Schallausbreitung zur Bestimmung der Modell-Laufzeitdifferenzen aufgrund von Zielpositionsannahmen werden von der Vielzahl bekannter Modelle für die Mehrwegeausbreitung des Schalls in einem Schallkanal die geeigneten Modelle herangezogen. Solche Modelle sind beispielsweise aus [1] ablesbar.

Gemäß einer vorteilhaften Ausführungsform der Erfindung wird ein einfaches geometrisches Modell in einem Flachwassergebiet mit der Wassertiefe $z_w$ bei ebenem Gewässerboden und konstantem Schallgeschwindigkeitsprofil zugrundegelegt. Bei einer bekannten Tiefe $Z_E$ des Schallempfängers und einer angenommenen Zieltiefe $z_s$ und azimutalen Zielentfernung x wird die Schallaufzeit $t_k$ für k ausgewähle Ausbreitungswege gemäß

$$t_k = \frac{1}{c} \sqrt{x^2 + z_k^2} \qquad (3)$$

berechnet, wobei c die konstante Schallgeschwindigkeit und $z_k$ der Weg ist, den der Schall in jedem Ausbreitungsweg k ausschließlich in vertikaler Richtung zurücklegt.

Mit einem solchen einfachen geometrischen Modell werden mit geringem Rechenaufwand bereits ausreichend genaue Ergebnisse in der Vermessung der Zielposition eines detektierten Ziels erzielt.

Gemäß einer vorteilhaften Ausführungsform der Erfindung wird bei festgestellter Zielposition die radiale Geschwindigkeit des Ziels, d.h. die auf den Empfänger gerichtete Geschwindigkeitskomponente des Ziels, und die Frequenz des vom Ziel abgestrahlten Schalls ermittelt. Hierzu werden die bei der Bestimmung der Modell-Laufzeitdifferenzen notwendigerweise berechneten Schall-Laufzeiten für den direkten Ausbreitungsweg des Schalls und für die ausgewählten indirekten Ausbreitungswege des Schalls zur festgestellten Zielpositionen und das Gruppensignal, in dem das Ziel detektiert worden ist, aufgerufen. Zu Zeitpunkten, die den aufgerufenen Schall-Laufzeiten entsprechen, werden aus dem Gruppensignal Frequenzspektren gebildet. Aus den Frequenzspektren werden Empfangsfrequenzen ausgelesen, die Differenzen der Empfangsfrequenzen gebildet und den aufgerufenen Schall-Laufzeiten zugeordnet. Für eine angenommene, vom Ziel abgestrahlte Frequenz und für eine angenommene, radiale Geschwindigkeit des Ziels werden zu jeder der aufgerufenen Schallaufzeiten Dopplerfrequenzverschiebungen, kurz Dopplerverschiebungen, berechnet und die Differenzen der Dopplerverschiebungen gebildet. Die Empfangsfrequenz-Differenzen und die Dopplerverschiebungs-Differenzen werden miteinander verglichen, und die Berechnung der Dopplerverschiebungen mit jeweils geänderter Zielfrequenz und/oder radialer Zielgeschwindigkeit und der Vergleich mit den Empfangsfrequenz-Differenzen wird solange wiederholt, bis sich ein vorgegebener Grad der Übereinstimmung ergibt. Die zum Erreichen dieses Übereinstimmungsgrads getroffenen Annahmen von Zielfrequenz und radialer Zielgeschwindigkeit werden als wahre Zielfrequenz und wahre radiale Zielgeschwindigkeit ausgegeben.

Diese Weiterbildung des erfindungsgemäßen Verfahrens hat den Vorteil, daß durch rein passive Detektion zusätzliche Zielparameter erhalten werden, die wertvollen Aufschluß über eine mögliche Bedrohung durch das Ziel geben. Mit der Bestimmung der Zielfrequenz kann das Ziel klassifiziert und mit der radialen Zielgeschwindigkeit die Geschwindigkeit festgestellt werden, mit der sich das Ziel auf den Empfänger zubewegt. Dies ermöglicht z.B. eine frühzeitige Torpedodetektion und -warnung und die Einleitung von Abwehrmaßnahemen aufgrund der Kenntnis der Torpedoangriffsgeschwindigkeit. Ist das Aktivsonar des Torpedos aktiviert, so ergeben sich in den Frequenzspektren des Gruppensignals signifikante Frequenzlinien, die der dopplerverschobenen Sendefrequenz des Aktivsonars entsprechen, wobei die Dopplerverschiebungen über die verschiedenen Schallausbreitungswege unterschiedlich sind.

Bei nicht aktiviertem Torpedosonar wird der Torpedo aufgrund seines spezifischen Antriebsgeräusches detektiert und seine Zielposition aus Meß-Laufzeitdifferenzen und Modell-Laufzeitdifferenzen bestimmt. In den Frequenzspektren des zur Zielposition gehörigen Gruppensignals treten signifikante hochfrequente Frequenzbänder auf, deren Mittenfrequenz mit ausreichender Genauigkeit Informationen über die darin enthaltene Dopplerverschiebung zur Bestimmung der radialen Zielgeschwindigkeit geben.

Gemäß einer bevorzugten Ausführungsform der Erfindung wird die Dopplerverschiebung im direkten Ausbreitungsweg des Schalls als Produkt aus angenommener Zielfrequenz und angenommener radialer Zielgeschwindigkeit dividiert durch die Schallgeschwindigkeit im Wasser bestimmt. Die Dopplerverschiebungen für die ausgewählten indirekten Ausbreitungswege werden aus dem Verhältnis der Laufzeit über dem direkten Ausbreitungsweg zur Laufzeit über den jeweiligen indirekten Ausbreitungsweg multipliziert mit der Dopplerverschiebung für den direkten Ausbreitungsweg berechnet.

Gemäß einer weiteren vorteilhaften Ausführungsform der Erfindung wird die Positionsbestimmung des Ziels verbessert und die Bestimmung der Geschwindigkeit des Ziels ohne eine Frequenzanalyse möglich. Der sich vom Ziel ausbreitende Schall wird auf dem direkten Ausbreitungsweg zum Empfänger am wenigsten gedämpft, da sein Weg am kürzesten ist und Verluste durch Reflexionen nicht auftreten. Durch die Geschwindigkeit des Ziels wird der Schall abhängig vom Ausbreitungsweg bei einer Annäherung des Ziels zeitlich unterschiedlich entsprechend dem Dopplereffekt gestaucht, so daß im Abstand der Laufzeitdifferenzen die Dopplerverschiebung des abgestrahlten Schalls unterschiedlich und zum direkt empfangenen Schall am größten ist. Diese gegenüber der Direktausbreitung unterschiedliche zeitliche Stauchung oder Dehnung des Schalls am Empfangsort wird erfindungsgemäß bei der Laufzeitbestimmung des Schalls für jede Positionsänderung des Ziels berücksichtigt.

Im Modell wird ein von der Geschwindigkeit abhängiger Modell-Stauchungsfaktor je Ausbreitungsweg für die nächste angenommene Position des Ziels bereitgestellt. Zur Schätzung der nächsten angenommenen Zielposition wird zu der bereits bestimmten Zielposition ein während eines Zeitintervalls mit einer angenommenen Geschwindigkeit zurückgelegtes Wegintervall hinzugefügt und dazu die Modell-Laufzeitdifferenzen und ihre zeitlichen Ableitungen bestimmt, die die Modell-Stauchungsfaktoren bilden. Sie entsprechen der relativen Dopplerverschiebung und werden für unterschiedliche Geschwindigkeiten aus der vorherigen Position für angenommene Positionen je Ausbreitungsweg aus der zeitlichen Änderung der Modell-Laufzeitdifferenzen berechnet und den Modell-Laufzeitdifferenzen zugeordnet.

Zu dem Meßzeitpunkt, zu dem die Position des Ziel bereits ermittelt wurde, wird das Gruppensignal mit dem größten Pegel innerhalb eines Zeitintervalls gespeichert und dem direkten Ausbreitungsweg zugeordnet. Seine Dopplerverschiebung bleibt konstant wenn während der nächsten beiden Zeitintervalle die Geschwindigkeit des Ziel auf dem direkten Ausbreitungsweg als konstant angenommen wird. Zum Erstellen von Mustersignalen wird das abgespeicherte Gruppensignal jeweils mit dem Modell-Stauchungsfaktor moduliert, indem der zeitliche Verlauf durch unterschiedliche Ausspeicherzeiten gestaucht oder gedehnt wird. Für jede angenommene Geschwindigkeit und Zielposition wird je Ausbreitungsweg ein Mustersignal erstellt.

Zum nächsten Meßzeitpunkt wird das momentan empfangene Gruppensignal mit den Mustersignalen, die aus dem Gruppensignal des vorherigen Meßzeitpunkts gewonnen wurden, kreuzkorreliert. Jede Kreuzkorrelation, die im Zeit oder Frequenzbereich erfolgen kann, liefert bei dem mit dem Mustersignal übereinstimmenden Ausbreitungsweg eine Meß-Laufzeitdifferenz, die der Modell-Laufzeitdifferenz entspricht. Zugleich ist die angenommene Geschwindigkeit gleich der Geschwindigkeit des Ziels, mit der es die neue Position eingenommen hat, wenn sämtliche Meß-Laufzeitdifferenzen und Modell-Laufzeitdifferenzen für alle Ausbreitungswege übereinanderliegen und der Vergleich zwischen Messung und Modell die kleinste Abweichung aufweist.

Der Vorteil der erfindungsgemäßen Weiterbildung besteht darin, daß die auch durch die Ambiguityfunktion bekannten Fehler bei der Laufzeitbestimmung, die durch die Stauchung oder Dehnung des empfangenen Gruppensignals gegenüber dem abgestrahlten Schall auftreten, durch die Bereitstellung der Mustersignale verkleinert werden. Durch die zeitliche Dehnung oder Stauchung des abgespeicherten Zeitstücks des Gruppensignals, das dem direkten Ausbreitungsweg zuzuordnen ist, wird ein Mustersignal geschaffen, das auf den über den Umweg empfangenen Schall frequenz- und zeitmäßig angepaßt ist. Nur bei Übereinstimmung liefern die Kreuzkorrelationsfunktionen Maxima. Werden Impulse empfangen, wird durch die erfindungsgemäße Erstellung der Mustersignale die Dehnung und Stauchung der Impulslänge je Ausbreitungsweg bereits berücksichtigt.

Der Vorteil des erfindungsgemäßen Verfahrens besteht darin, daß breitbandig ohne Frequenzmessung allein aus der mit dem Dopplereffekt erklärbaren zeitlichen Stauchung oder Dehnung der übertragenen Schallwelle die Geschwindigkeit des Ziels ermittelt werden kann, da die Modell-Stauchungsfaktoren für die unterschiedlichen Ausbreitungswege abhängig vom Schallkanal und einer vorgegebenen Geschwindigkeit berechnet werden.

Für eine Klassifizierung des Ziels besteht der Vorteil, aus der relativen Dopplerverschiebung, die der Modell-Stauchungsfaktor angibt, und der Geschwindigkeit des Ziels die Frequenz oder das Frequenzband des vom Ziel abgestrahlten Schalls ohne Frequenzanalyse zu ermitteln.

Eine weitere Verbesserung, insbesondere bei einer Annäherung des Ziels, besteht darin, daß ab einer vorgebbaren Zielentfernung von einer breitbandige Auswertung des Gruppensignals auf eine Auswertung innerhalb eines Frequenzbreichs mit vorgebbarer Mittenfrequenz und Bandbreite umgeschaltet werden kann und dadurch das Nutz-/Störverhältnis verbessert wird. Insbesondere im mittleren und oberen Frequenzbereich, der im Nahbereich trotz der höheren Dämpfung gut empfangen werden kann, ist die Dopplerverschiebung für die unterschiedlichen Ausbreitungswege signifikant unterschiedlich, so daß die Bestimmung der Maxima der Kreuzkorrelationsfunktion für die unterschiedlichen Ausbreitungswege eindeutige Ergebnisse liefert und damit die Positions- und Gerschwindigkeitsbestimmung verbessert wird. Weiterhin besteht der Vorteil, daß durch die Bandbreite die Auflösung der Entfernungsmessung und durch die Integrationszeit bei der Kreuzkorrelationsfunktion die Auflösung der Geschwindigkeitsmessung abhängig von einer Falschalarmrate eingestellt werden kann. Die Entfernungsauflösung ist umso besser, je größer die Bandbreite ist, während die Geschwindigkeitsauflösung mit steigender Integrationszeit wächst. Zumindest während der Integrationszeit und des Zeitintervalls muß die Geschwindigkeit konstant und das Übertragungsverhalten des Schallkanals stabil bleiben.

Die Erfindung ist anhand eines in der Zeichnung illustrierten Ausführungsbeispiels im folgenden näher beschrieben. Es zeigen:

Fig. 1    ein Blockschaltbild einer Schaltungsanordnung zur Erläuterung des Verfahrens zum Bestimmen der Zielposition eines schallabstrahlenden Ziels,

Fig. 2    ein Diagramm einer Autokorrelationsfunktion eines Gruppensignals zur Bestimmung der Meß-Laufzeitdifferenzen,

Fig. 3    ein Diagramm eines Cepstrums des gleichen Gruppensignals zur Bestimmung der Meß-Laufzeitdifferenzen,

Fig. 4    eine grafische Darstellung eines geometrischen Schallausbreitungsmodells mit Berechnung der Schallaufzeiten in den einzelnen Ausbreitungswegen,

Fig. 5    ein Blockschaltbild einer gegenüber Fig. 1 modifizierten Schaltungsanordnung,

Fig. 6    ein gegenüber dem Blockschaltbild gemäß Fig. 1 erweitertes Blockschaltbild zur Erläuterung des Verfahrens zum Bestimmen der Zielparameter: radiale Zielgeschwindigkeit und Zielfrequenz nach festgestellter Zielposition und

Fig. 7    ein gegenüber dem Blockschaltbild gemäß Fig. 1 für die Bestimmung von Meß-Laufzeitdifferenzen erweitertes Blockschaltbild.

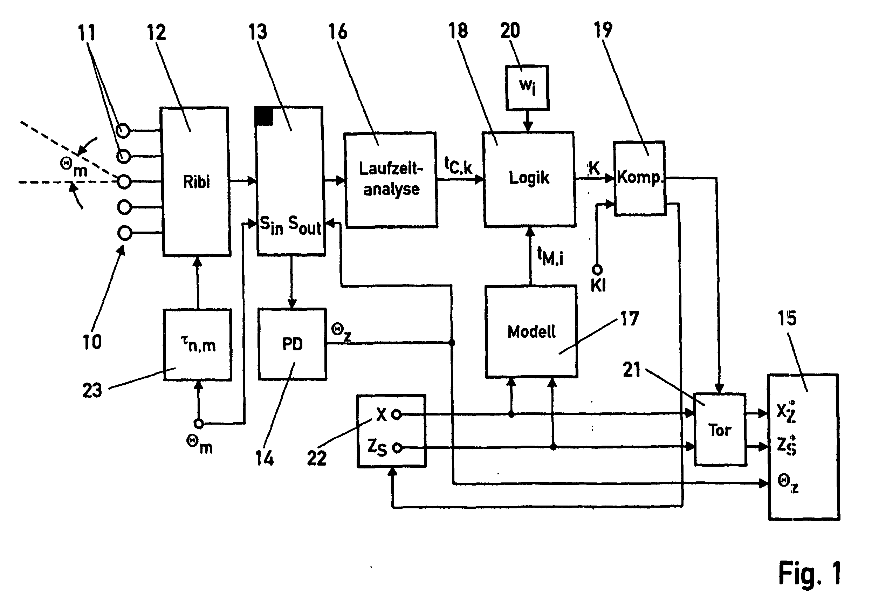

Bei dem nachfolgend anhand des Blockschaltbilds in Fig. 1 beschriebenen Verfahren zum Bestimmen der Zielposition eines Schall ins Wasser abstrahlenden Ziels von einem zielfernen, untergetauchten Schallempfänger aus, wird die Tatsache ausgenutzt, daß sich im Wasser aufgrund von Temperaturschichtungen oder aufgrund nur begrenzter Wassertiefe Schallkanäle bilden, in denen sich der Schall auf verschiedenen, reflexionsbedingten Ausbreitungswegen unterschiedlicher Länge ausbreitet und damit nach unterschiedlichen Laufzeiten am Schallempfänger eintrifft, so daß ein vom Schallempfänger aufgenommenes Empfangssignal zeitliche Überlagerung des gleichen Signals enthält. Ein Ziel ist jede im Wasser befindliche Schallquelle, wie sie z.B. von den Antriebsmaschinen oder sonstigen geräuscherzeugenden Arbeitsaggregaten eines Oberflächenschiffes, U-Boots oder Torpedos gebildet wird. Der von diesen Maschinen und Aggregaten ausgesendete Schall ist breitbandig. Die Schallquelle kann aber auch ein aktiv sendendes Sonar sein, das in einem Oberflächenschiff, U-Boot oder Torpedo installiert ist und Schallimpulse ins Wasser abstrahlt. Der Schallempfänger 10, der auf einer ins Wasser eintauchenden Plattform, z.B. einem U-Boot, installiert ist, weist in bekannter Weise eine Mehrzahl von elektroakustischen Wandlern 11 auf, die im Ausführungsbeispiel der Fig. 1 eine Linearantenne bilden, wie sie z.B. als Schleppantenne (Towed-Array) oder als am Bootskörper befestigte Seitenantenne (Flank-Array), mitunter auch als Bordwandstreamer bezeichnet, bei U-Booten verwendet wird.

Die elektrischen Ausgangssignale der Wandler 11 werden in bekannter Weise mittels eines Beamformers oder Richtungsbildners 12 richtungsselektiv zu Gruppensignalen addiert. Hierzu werden im Richtungsbildner 12 die Ausgangssignale der Wandler 11 zeit- oder phasenverzögert, und zwar derart, daß unter Berücksichtigung der gewünschten Einfalls- oder Peilrichtung $\theta_m$ alle Empfangssignale der Wandler 11 konphas sind. Die Verzögerungszeiten $\tau_{n,m}$ werden für jeden Wandler 11 für eine vorgegeben Peilrichtung $\theta_m$ von dem Verzögerungsrechner 23 zur Verfügung gestellt. Die in jeder Peilrichtung $\theta_m$ erhaltenen konphasen Ausgangssignale werden im Richtungsbildner 12 addiert und in einen Speicher 13 in Zuordnung zu der jeweiligen Peilrichtung $\theta_m$ abgelegt. Ein Pegeldetektor 14 ermittelt aus den Pegeln der abgespeicherten Gruppensignale die größten Pegel und gibt die den größten Pegeln der Gruppensi-

gnale zugeordneten Peilrichtungen $\theta_m$ als Zielpeilungen $\theta_z$ aus, die einer Anzeigevorrichtung 15 zugeführt und in dieser numerisch und grafisch dargestellt werden.

Für eine Zielpeilung mit dem Peilwinkel $\theta_z$ wird aus dem Speicher 13 das zugeordnete Gruppensignal ausgelesen, und zur Bestimmung der Zielposition des unter dem Peilwinkel $\theta_z$ detektierten Ziels wird dieses Gruppensignal einer Signalverarbeitung wie folgt unterzogen:

In dem Gruppensignal werden mittels einer Laufzeitanalyse in dem Signalverarbeitungsblock 16 die im Gruppensignal enthaltenen Laufzeitdifferenzen zwischen dem direkten Ausbreitungsweg des Schalls und den durch Reflexionen im Schallkanal entstehenden indirekten Ausbreitungswegen des Schalls zwischen dem Ziel und dem Schallempfänger 10 als Meß-Laufzeitdifferenzen $t_{C,k}$ gemessen. In einem Modellblock 17 werden mittels eines ausgewählten Modells der Schallausbreitung in einem Schallkanal für eine angenommene Zielposition, die bestimmt ist durch eine angenommene Zielentfernung x und eine angenommene Zieltiefe $z_S$, die Laufzeitdifferenzen zwischen dem direkten Ausbreitungsweg und ausgewählten indirekten Ausbreitungswegen des Schalls vom Ziel zum Schallempfänger 10 als Modell-Laufzeitdifferenzen $t_{M,i}$ bestimmt. Die Meß-Laufzeitdifferenzen aus dem Signalverarbeitungsblock 16 und die Modell-Laufzeitdifferenzen aus dem Modellblock 17 werden einer Vergleichslogik 18 zugeführt. In der Vergleichslogik 18 werden die Modell-Laufzeitdifferenzen mit dem Meß-Laufzeitdifferenzen verglichen. Ergibt der Vergleich einen nicht ausreichenden Grad der Übereinstimmung, so wird die Bestimmung der Modell-Laufzeitdifferenzen im Modellblock 17 mit einer geänderten Zielpositionsannahme wiederholt, und die neuen Modell-Laufzeitdifferenzen werden erneut mit den Meß-Laufzeitdifferenzen verglichen. Hierzu wird jeweils ein Zielpositions-Vorgabemodell 22 von dem Komparator 19 aktiviert, der die neue Zielpositionsannahme der Vergleichslogik 18 und einem Tor 21 zugeführt. Dieser Vorgang wird solange wiederholt, bis der Vergleich der Modell-Laufzeitdifferenzen mit den Meß-Laufzeitdifferenzen einen ausreichenden Grad der Übereinstimmung ergibt. Ist dies der Fall, dann wird von dem Komparator 19 das Tor 21 geöffnet und die zum Erreichen dieses Übereinstimmungsgrads zuletzt getroffene Zielpositionsannahme als echte Zielposition mit der Zielentfernung $x_Z^*$ und der Zieltiefe $z_S^*$ an die Anzeigevorrichtung 15 ausgegeben und in der Anzeigevorrichtung 15 grafisch und numerisch dargestellt.

Die Vergleichslogik 18, die durch Vergleich der Modell- und Meß-Laufzeitdifferenzen die Aufenthaltswahrscheinlichkeit des Ziels an der angenommenen Zielposition ermittelt, kann nach verschiedenen Algorithmen arbeiten. Im Ausführungsbeispiel arbeitet die Vergleichslogik 18 nach dem Least-Square-Verfahren. Die Wahrscheinlichkeit, bei der angenommenen Zielposition das Ziel zu finden, ist danach umgekehrt proportional zur Summe der kleinsten Abstandsquadrate der Modell-Laufzeitdifferenzen und der Meß-Laufzeitdifferenzen. Dabei wird im Modell zunächst die Anzahl $n_M$ der zu berücksichtigenden Laufzeitdifferenzen festgelegt, die vom Signal-Noise-Ratio (SNR) des Gruppensignals, von der maximalen Anzahl der indirekten Ausbreitungswege u.a. abhängt. Dann wird für jede Modell-Laufzeitdifferenz $t_{M,i}$ diejenige Laufzeit $t_{min}(i)$ gesucht, die einer beliebigen Meß-Laufzeitdifferenz $t_{C,k}$ am nächsten kommt. i ist der Index der Modell-Laufzeitdifferenzen und k der Index der Meß-Laufzeitdifferenzen. Der mathematische Ausdruck hierfür ist

$$t_{min}(i) = t_k \tag{4}$$

mit

$$k = \arg\min |t_{M,i} - t_{C,k}| \tag{5}.$$

Die Funktion argmin liefert das Argument, d.h. den Index k für den der Ausdruck auf der rechten Seite von Gl.(5) minimal ist, hier also den Index k einer Meß-Laufzeitdifferenz mit minimalem Abstand zu einer Modell-Laufzeitdifferenz.

Schließlich wird die Summe der minimalen Abstandsquadrate über alle Modell-Laufzeitdifferenzen gemäß:

$$K(z_S, x) = \sum_{i=1}^{n_M} (t_{M,i} - t_{min}(i))^2 \tag{6}$$

gebildet. Das Minimum von $K(z_S,x)$ liefert Zielentfernung und Zieltiefe.

Die Summe $K(z_S,x)$ dieser kleinsten Abstandsquadrate wird in einem Komparator 19 mit einem Konfidenzintervall KI verglichen. Liegt $K(z_{S,x})$ nicht innerhalb dieses Konfidenzintervalls KI, so wird vom Komparator 19 im Block 20 eine neue Zielpositionsannahme mit einer neuen Zieltiefe $z_S$ und Zielentfernung x ausgelöst, die dem Modellblock 17 zugeführt wird und zu einer neuen Berechnung der Modell-Laufzeitdifferenzen für die neue Zielpositionsannahme führt. In der Vergleichslogik 18 wird wiederum die Summe $K(z_S,x)$ der kleinsten Abstandsquadrate gebildet und im Komparator 19 mit dem Konfidenzintervall KI verglichen. Liegt schließlich bei einer gewählten Zielpositionsannahme die Summe $K(z_S,x)$ der kleinsten Abstandsquadrate innerhalb des Konfidenzintervalls KI, so wird von dem Komparator 19 das Tor 21 geöffnet, und die zuletzt getroffene Zielpositionsannahme wird als echte Zielposition mit der Zielentfernung $x_Z^*$ und Zieltiefe $z_S^*$ der Anzeigevorrichtung 15 zugeführt und dort grafisch und numerisch dargestellt.

Alternativ zu der Abprüfung mit einem Konfidenzintervall können die Summen der minimalen Abstandsquadrate in Wahrscheinlichkeiten umgerechnet werden und ein 2D- oder 3D-Plot für die Aufenthaltswahrscheinlichkeit bestimmt wird. Ein Maß für die Aufenthaltswahrscheinlichkeit $P(z_S,x)$ eines Ziels in der angenommenen Zielposition ist der Kehrwert der Summe $K(z_S,x)$ der minimalen Abstandsquadrate. Je geringer $K(z_S,x)$ ist, desto größer ist die Wahrscheinlichkeit, daß sich das Ziel bei den angenommenen Koordinaten $x,z_S$ der Zielposition befindet. Die Summe muß noch derart normiert werden, daß das räumliche Integral über alle Wahrscheinlichkeitsdichten bzw. die Summe über alle $P(z_S,x)$ gleich 1 ist, also gilt

$$\int_s \int_x P(z_s, x)\, dz_s\, dx = 1 \qquad\qquad (7)$$

Nach dieser Normierung können für die Vielzahl der angenommenen Zielpositionen die Wahrscheinlichkeitsdichten pro Fläche im Zielgebiet dargestellt werden. Ein Algorithmus oder ein Operator kann in der Darstellung erkennen, ob eine mehrdeutige Situation mit mehreren lokalen Maxima und potentiellen Zielpositionen vorliegt oder ob die Situation eindeutig ist.

Um den Einfluß von stark gedämpften, durch die Laufzeitanalyse nicht eindeutig identifizierbare Meß-Laufzeitdifferenzen höherer Ordnung zu reduzieren, werden in der Vergleichslogik die minimalen Abstandsquadrate vor Summenbildung mit einem Wichtungsfaktor $w_i$ gewichtet, der in dem Block 22 generiert wird. Die Wichtungsfaktoren, die abhängig sind von der Anzahl der Schallreflexionen in indirekten Ausbreitungswegen, können direkt aus dem Schallausbreitungsmodell abgelegt werden. Bei einem nachfolgend noch beschriebenen einfachen Schallausbreitungsmodell finden beispielsweise Reflexionen des Schalls mit dem Reflexionsfaktor R in jedem indirekten Ausbreitungsweg statt, wobei die Amplitude der Schallwelle sich um den Faktor $R^n$ reduziert. Da der Reflextionsfaktor $R_B$ am Boden und der Reflexionsfaktor $R_O$ an der Oberfläche des Schallkanals unterschiedlich sind, setzen sich die Wichtungsfaktoren $w_i$ in jedem Ausbreitungsweg i aus dem Teil mit Bodenreflexion und aus dem Teil der Oberflächenreflexion gemäß

$$w_i = R_B^{n_B} \cdot R_O^{n_O} \qquad\qquad (1)$$

zusammen, wobei $n_B$ die Anzahl der Bodenreflexionen und $n_o$ die Anzahl der Oberflächenreflexionen ist. Für die Reflexionsfaktoren $R_B$ und $R_O$ werden plausible Werte zwischen 0 und 1 verwendet, die a priori festgelegt werden. Beispielsweise wird der Reflexionsfaktor $R_B = 0,5$ und der Reflexionsfaktor $R_O = 0,75$ festgelegt. Bei zwei Bodenreflexionen und einer Oberflächenreflexion im q-ten Ausbreitungsweg ergäbe sich ein Wichtungsfaktor $w_q = 0,1875$ mit dem das minimale Abstandsquadrat $(t_{M,q} - t_{min}(q))^2$ des Ausbreitungswegs i=q multipliziert werden müßte.

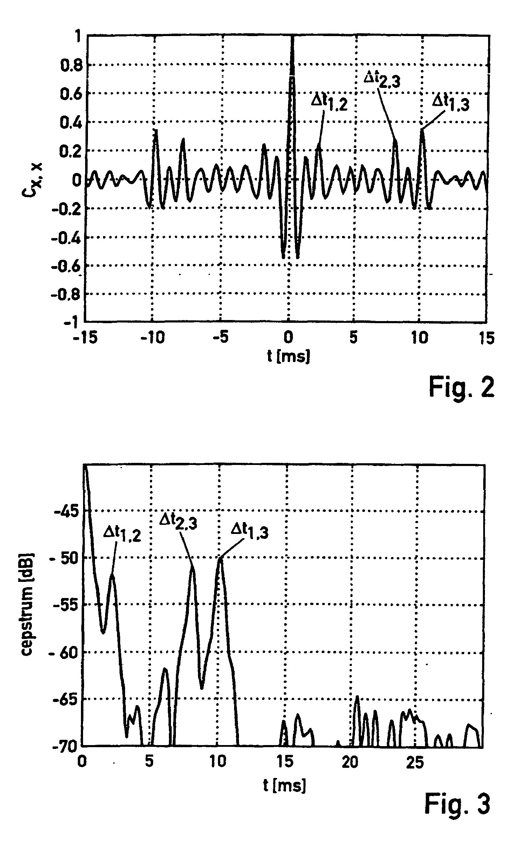

Die Laufzeitanalyse zur Ermittlung der im Gruppensignal enthaltenen Meß-Laufzeitdifferenzen kann auf verschiedene Weise vorgenommen werden. In einem ersten Ausführungsbeispiel wird zur Laufzeitanalyse die Autokorrelationsfunktion des Gruppensignals gebildet. Eine solche Bildung der Autokorrelationsfunktion ist in [2] beschrieben. Die Autokorrelationsfunktion besteht bei Mehrwegeausbreitung aus einer Überlagerung von Autokorrelationsfunktionen, die jeweils um die Differenzen der relativen Laufzeiten verschoben sind. Diese Laufzeitdifferenzen können durch Auswerten der Maxima der Autokorrelationsfunktion des Gruppensignals bestimmt werden, wobei aufgrund der Symmetrie der Autokorrelationsfunktion nur positive Laufzeitdifferenzen berücksichtigt werden. In Fig. 2 ist eine solche Autokorrelationsfunktion dargestellt. Deutlich ist ein Maximum bei einer Laufzeitdifferenz 0 ms zu sehen, das dem direkten Schallausbreitungsweg entspricht. Weitere Maxima sind bei 2 ms, 8 ms und 10 ms zu finden, die Laufzeitdifferenzen zwischen dem direkten Ausbreitungsweg und zwei indirekten Ausbreitungswegen sowie zwischen den beiden indirekten Ausbreitungswegen definieren. Die Maxima sind mit $\Delta t_{1,2}$, $\Delta t_{1,3}$, und $\Delta t_{2,3}$ gekennzeichnet.

Bevorzugt wird zur Laufzeitanalyse im Signalverarbeitungsblock 16 eine Cepstralanalyse auf das Gruppensignal angewendet und die Meß-Laufzeitdifferenzen durch Auswertung der Maxima im Cepstrum gewonnen. Die Cepstralanalyse ist an sich bekannt und in [3] beschrieben. Wie bereits erwähnt ist das reelle Cepstrum definiert als Fouriertransformierte des Logarithmus des Absolutwerts des Autospektrums des Gruppensignals gemäß Gl.(2), wobei $X(e^{i\omega t})$ die Fouriertransformierte des Signals darstellt. Die Laufzeitdifferenzen lassen sich in den Maxima des Cepstrums leicht identifizieren. Ein Beispiel eines aus einer Cepstralanalyse gewonnenen Cepstrums ist in Fig. 3 dargestellt. Die Laufzeitdifferenz $\Delta t_{1,2}$ zwischen dem direkten Ausbreitungsweg und einem ersten indirekten Ausbreitungsweg ist bei 2 ms zu finden. Die Laufzeitdifferenz $\Delta t_{1,3}$ zwischen dem direkten Ausbreitungsweg und einen zweiten indirekten Ausbreitungsweg beträgt 10 ms, während noch eine Laufzeitdifferenz $\Delta t_{2,3}$ zwischen dem ersten und zweiten indirekten Ausbreitungsweg durch das Maximum bei 8 ms identifiziert wird. Ein Vergleich mit der Autokorrelationsfunktion gemäß Fig. 2 zeigt, daß diese Laufzeitdifferenzen in gleicher Größe auch in der Autokorrelationsfunktion zu finden sind. Im Cepstrum lassen sich die Maxima aber wesentlich leichter identifizieren, weil hier keine Nebenmaxima auftauchen - wie dies in der Autokorrelationsfunktion der Fall ist - und somit reale Maxima von vorhandenen Reflexionen nicht mit Nebenmaxima verwechselt werden können.

Als Modelle für die Erstellung der Modell-Laufzeitdifferenzen können von dem bereits bekannten Modellen entsprechend geeignete ausgewählt und in dem vorgestellten Verfahren eingesetzt werden. In [1] oder [5] sind verschiedene Modelle angegeben, die ggf. mit entsprechender Anpassung oder Modifikation verwendet werden können. Ein ebenfalls geeignetes Schallausbreitungsmodell ist unter dem Namen "RAY" bekannt und in [4] beschrieben. Aber auch die Verwendung eines einfachen geometrischen Schallausbreitungsmodells, das im folgenden beschrieben wird, zeigt bereits recht gute Ergebnisse in der Genauigkeit der Bestimmung einer Zielposition.

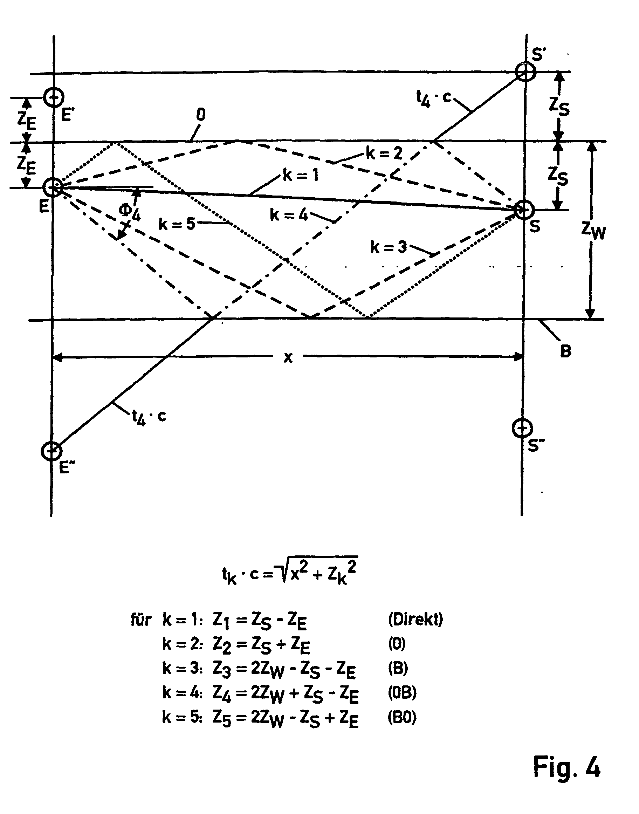

In Fig. 4 ist ein in einem Flachwassergebiet von z.B. einer Wassertiefe von ca. 200 m sich bildender Schallkanal, in dem ein Ziel S in einer Zieltiefe $z_S$ und ein Schallempfänger E in der Empfangstiefe $z_E$ angeordnet sind, und voneinander eine Entfernung x aufweisen, schematisch dargestellt. Mit O ist die Wasseroberfläche und mit B der Boden des Schallkanals bezeichnet. Der Boden B wird als eben und das Schallgeschwindigkeitsprofil des Schallkanals als konstant mit der konstanten Schallgeschwindigkeit c angenommen. Der vom Ziel S abgestrahlte Schall gelangt einmal auf direktem Ausbreitungsweg zum Empfänger E und zum anderen auf indirekten Ausbreitungswegen durch Reflexionen an der Oberfläche O und am Boden B zu dem Empfänger E. Der direkte Ausbreitungsweg ist in Fig. 4 mit der Ordnungszahl k = 1 bezeichnet und ausgezogen dargestellt. Die indirekten Ausbreitungswege sind in Fig. 4 mit k = 2 bis k = 5 bezeichnet, wobei der strichlinierte Ausbreitungsweg k = 2 eine Reflexion des Schalls an der Wasseroberfläche O und der strichliniert dargestellte indirekte Ausbreitungsweg k = 3 eine Reflexion des Schalls am Boden B enthält. Die beiden weiteren strichpunktiert und punktiert dargestellten indirekten Ausbreitungswege k = 4 und k = 5 enthalten jeweils eine Reflexion des Schalls an der Wasseroberfläche O und am Boden B.

Der Weg, den der Schall in jedem der k-Ausbreitungswege zurücklegen muß und $t_k \cdot c$ beträgt, kann durch Annahme entsprechender Spiegelziele S' und S" oder Spiegelempfänger E' und E" für die verschiedenen Ordnungen der Ausbreitungswege berechnet werden. Die Geometrie für die Berechnung des indirekten Ausbreitungsweges k = 4 ist in Fig. 4 durch das dargestellte rechtwinklige Dreieck, dessen Hypothenuse sich zwischen dem Spiegelziel S' und dem Spiegelempfänger E" erstreckt und dessen eine Kathete von der Entfernung x gebildet wird, herausgehoben. Allgemein berechnet sich die Laufzeit $t_k$ für jeden der k-Ausbreitungswege gemäß Gl. (2) zu

$$t_k = \frac{1}{c}\sqrt{x^2 + z_k{}^2} \tag{3},$$

wobei $z_k$ der Weg ist, den der Schall ausschließlich in vertikaler Richtung zurücklegen muß. In Fig. 4 ist die Berechnung des Wertes $z_k$ für die Ausbreitungwege k = 1 bis k = 5 angegeben. Der Elevationswinkel $\Phi_k$ der Schalleinfallsrichtung am Empfänger E bei Schallausbreitung über die Ausbreitungswege k berechnet sich zu

$$\tan \Phi_k = \frac{z_k}{x} \tag{8}$$

und kann zur Korrektur des gemessenen Peilwinkels $\theta_Z$ verwendet werden. Der Einfallswinkel des über den Ausbreitungsweg k = 4 am Empfänger E eintreffenden Schalls ist in Fig. 4 mit $\Phi_4$ eingezeichnet.

Mittels des geometrischen Modells werden mit Vorgabe einer angenommenen Zielentfernung x und einer angenommen Zieltiefe $z_S$ die Laufzeiten $t_k$ für ausgewählte Ausbreitungswege des Schalls im Schallkanal bestimmt. Die Laufzeitdifferenzen $t_{M,i}$ werden durch Subtraktion der Laufzeiten $t_1$ für den direkten Ausbreitungsweg k = 1 von dem jeweiligen indirekten Ausbreitungsweg $t_k$ mit k größer 1 gewonnen und - wie beschrieben - der Vergleichslogik 18 zugeführt.

In dem Fall, in dem zur Gewinnung der Meß-Laufzeitdifferenzen im Signalverarbeitungsblock 16 mittels Cepstralanalyse das Cepstrum des Gruppensignals gebildet wird, kann das im Modellblock 17 verwendete Modell dahingehend erweitert werden, daß mit den Modell-Laufzeitdifferenzen ein Modell-Cepstrum gebildet wird. Die Vergleichslogik 18 wird dahin abgewandelt, daß nun nicht mehr die einzelnen Meß-Laufzeitdifferenzen von Cepstrum und Modell miteinander verglichen werden, sondern unmittelbar das gemessene Cepstrum mit dem Modell-Cepstrum.

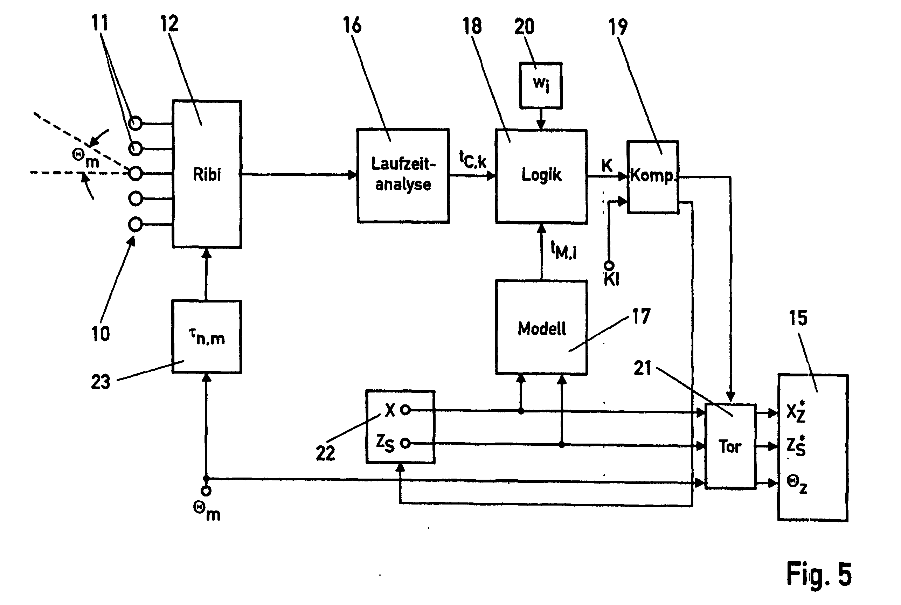

Bei Inkaufnahme eines erweiterten Rechenaufwands kann auf die gesonderte Zieldetektion und Zielpeilung mittels der zur Fig. 1 beschriebenen Peilanlage verzichtet werden und mit dem erfindungsgemäßen Verfahren auch die Zieldetektion und Zielpeilung durchgeführt werden. Eine gegenüber Fig. 1 modifizierte Schaltungsanordnung für das so abgewandelte Verfahren ist im Blockschaltbild in Fig. 5 dargestellt. In der Schaltungsanordnung sind Gruppensignal-Speicher und Pegeldetektor entfallen und der vorgegebene Winkel $\theta_m$ für den momentanen Schalleinfall (Peilrichtung) ist zusammen mit den Werten für Zielentfernung x und Zieltiefe $z_S$ der Zielpositionsannahme an das Tor 21 gelegt. Im übrigen läuft das Verfahren in gleicher Weise ab, wie es zur Fig. 1 beschrieben ist, wobei durch Änderung der Peilrichtung $\theta_m$ in diskreten Winkelschritten der gesamte Azimut nach Zielen abgesucht wird. Sobald das gewünschte Maß der Übereinstimmung zwischen den Meß-Laufzeitdifferenzen und den Modell-Laufzeitdifferenzen bei einer Peilrichtung $\theta_m$ erreicht wird und der Komparator 19 das Tor 21 öffnet, wird auch die zu der echten Zielposition gehörende Peilrichtung $\theta_m$, die dann dem echten Peilwinkel $\theta_Z$ entspricht, der Anzeigevorrichtung 15 zugeführt und dort zusammen mit der zur echten Zielposition gehörenden echten Zielentfernung x* und echten Zieltiefe $z_S$* numerisch und grafisch dargestellt.

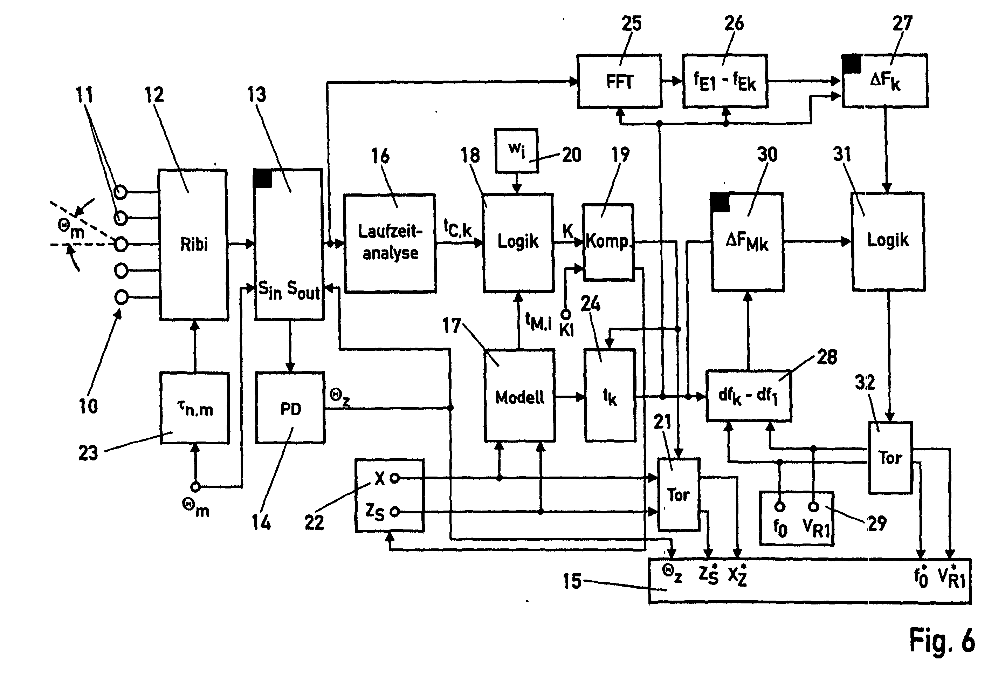

Das vorstehend beschriebene Verfahren läßt sich auch zum Bestimmen weiterer Zielparameter heranziehen, nachdem die Zielposition festgestellt worden ist. Diese Zielparameter sind die Frequenz des vom Ziel abgestrahlten Schalls, im folgenden Zielfrequenz genannt, und die radiale Geschwindigkeit des Ziels, das ist die Geschwindigkeitskomponente, mit dem sich das Ziel auf direktem, d.h. radialem, Weg auf den Empfänger zubewegt, im folgenden radiale Zielgeschwindigkeit genannt. Diese zusätzlichen Verfahrensschritte werden anhand des in Fig. 6 wiedergegebenen Blockschaltbilds erläutert, wobei das Blockschaltbild gemäß Fig. 1 vollständig in Fig. 6 integriert ist und insoweit auch die gleichen Bezugszeichen aus Fig. 1 in Fig. 6 übernommen worden sind.

Das Blockschaltbild der Fig. 1 ist dabei zunächst so erweitert, daß die Laufzeiten $t_k$ des Schalls, die mit dem Schallausbreitungsmodell im Modellblock 17 für die Ausbreitungswege berechnet werden, fortlaufend in einen Laufzeitenspeicher 24 eingeschrieben werden, wobei die für eine vorhergehende Zielposition berechneten Laufzeiten $t_k$ jeweils mit den für eine nachfolgende Zielposition berechneten Laufzeiten $t_k$ überschrieben werden, so daß im Laufzeitenspeicher 24 immer die für die zuletzt angenommene Zielposition berechneten Laufzeiten $t_k$ abgelegt sind. Ist die wahre Zielposition erkannt worden, so wird durch das Ausgangssignal des Komparators 19 das Tor 21 geöffnet und die wahre Zielentfernung $x_Z$*, die wahre Zieltiefe $z_S$* und der Peilwinkel $\theta_Z$ der Anzeigevorrichtung 15 zugeführt. Gleichzeitig gelangt das Komparatorsignal als Auslesesignal an den Laufzeitenspeicher 24, so daß die im Laufzeitenspeicher 24 enthaltenen Laufzeiten $t_k$ nacheinander ausgelesen und einem Fouriertransformator 25 als Steuersignal zugeführt werden. In dem zu Fig. 4 beschriebenen Ausführungsbeispiel werden somit die Laufzeiten $t_k$ mit k=1 bis 5 ausgelesen. Im Fouriertransformator 25 wird das Gruppensignal, mit dem die Zielpeilung $\theta_Z$ festgestellt worden ist, einer Fouriertransformation unterzogen und für Zeitpunkte, die den ausgelesenen Laufzeiten $t_k$ entsprechen, die Frequenzspektren gebildet. Aus den Frequenzspektren werden die Empfangsfrequenzen $f_{Ek}$ in Zuordnung zu den Laufzeiten $t_k$ ausge-lesen, und im Differenzbildner 26 werden die Differenzen der Empfangsfrequenzen

$$\Delta F_k = f_{E1} - f_{Ek} \tag{9}$$

mit k>1 gebildet und im Speicher 26 in Zuordnung zu den Laufzeiten $t_k$ mit k>1 abgespeichert.

Die aus dem Laufzeitenspeicher 24 ausgelesenen Laufzeiten $t_k$ werden einem Rechner 28 zugeführt. Der Rechner 28 ist mit einem Vorgabemodul 29 für die Zielfrequenz fo und radiale Zielgeschwindigkeit $v_{R1}$ verbunden. Im Rechner 28 wird für jede Laufzeit $t_k$ die Dopplerverschiebung $df_k$ berechnet, wobei sich die Dopplerverschiebung für den direkten Ausbreitungsweg gemäß

$$df_1 = \frac{f_o \cdot v_{R1}}{c} \tag{10}$$

und die Dopplerverschiebungen für die indirekten Ausbreitungswege gemäß

$$df_k = df_1 \cdot \frac{t_1}{t_k} \tag{11},$$

ergeben, wobei c die Schallgeschwindigkeit im Wasser und k die Ordnungszahl für alle ausgewählten indirekten Ausbreitungswege ist, die im Ausführungsbeispiel der Fig. 4 gleich k=2, 3, 4, 5 beträgt. Weiterhin werden im Rechner 28 aus den berechneten Dopplerverschiebungen $df_k$ in den einzelnen Ausbreitungswegen k die Differenzen der Doppler-

verschiebungen gemäß

$$\Delta F_{Mk} = df_k - df_1 \tag{12},$$

bestimmt, wobei k wiederum die Ordnungszahl für die indirekten Ausbreitungswege und damit k>1 ist. Diese Dopplerverschiebungs-Differenzen $\Delta F_{Mk}$ werden in einem Speicher 30 in Zuordnung zu den Laufzeiten $t_k$ mit k>1 abgespeichert. In einer Vergleichslogik 31 werden die Empfangsfrequenz-Differenzen $\Delta F_k$ und die Dopplerverschiebungs-Differenzen $\Delta F_{Mk}$ die den gleichen Schallaufzeiten $t_k$ mit k>1 zugehörig sind, miteinander verglichen. Ergibt der Vergleich einen nicht ausreichenden Grad der Übereinstimmung, so wird die Bestimmung der Dopplerverschiebungs-Differenzen $\Delta F_{Mk}$ im Rechner 28 mit einer geänderten Zielfrequenz $f_0$ und/oder einer geänderten radialen Zielgeschwindigkeit $v_{R1}$ wiederholt, und die neuen Dopplerverschiebungs-Differenzen $\Delta F_{Mk}$ werden wieder mit den Empfangsfrequenz-Differenzen $\Delta F_k$ verglichen. Dieser Vorgang wird solange wiederholt, bis der Vergleich der Dopplerverschiebungs-Differenzen $\Delta F_{Mk}$ mit den Empfangsfrequenzen-Differenzen $\Delta F$ einen ausreichenden Grad der Übereinstimmung ergibt. Ist dies der Fall, dann wird ein Tor 32 geöffnet, an dem jeweils die zuletzt angenommene oder vorgegebene Zielfrequenz fo und die zuletzt angenommene radiale Zielgeschwindigkeit $v_{R1}$ anstehen. Mit Öffnen des Tors 32 werden die zuletzt getroffenen Annahmen von Zielfrequenz $f_0$ und radialer Zielgeschwindigkeit $v_{R1}$ der Anzeigevorrichtung 15 zugeführt und dort als echte Zielfrequenz $f_0^*$ und echte radiale Zielgeschwindigkeit $v_{R1}^*$ graphisch und numerisch dargestellt.

Die Vergleichslogik 31 arbeitet in gleicher Weise wie die zuvor beschriebenen Vergleichslogik 18, z.B. nach dem Least-Square-Verfahren, wobei als Kriterium beim Vergleich der Empfangsfrequenz-Differenzen $\Delta F_k$ und der Dopplerverschiebungs-Differenzen $\Delta F_{Mk}$ die Summe der minimalen Abstandsquadrate der Dopplerverschiebungs-Differenzen $\Delta F_{Mk}$ zu ihren nächsten Nachbarn in der Menge der Empfangsfrequenz-Differenzen $\Delta F_k$ verwendet wird. Wie der Vergleichslogik 18 kann auch der Vergleichslogik 31 noch ein hier nicht dargestellter Komparator nachgeordnet sein, in dem die Summe der minimalen Abstandsquadrate mit einem Konfidenzintervall verglichen wird. Liegt die Summe innerhalb des Konfidenzintervalls, so ist der vorgegebene Grad der Übereinstimmung der Dopplerverschiebungs-Differenzen $\Delta F_{Mk}$ mit den Empfangsfrequenzen-Differenzen $\Delta F_k$ erreicht, und der Komparator generiert das Toröffnungssignal für das Tor 32. Liegt die Summe außerhalb des Konfidenzintervalls, so löst das Komparatorsignal eine neue Vorgabe von Zielfrequenz und/oder radialer Zielgeschwindigkeit im Vorgabemodul 29 aus.

Um eine größere Anzahl von Vergleichswerten zu erhalten, ohne die Zahl der ausgewählten Ausbreitungswege bzw. der ausgewählten Laufzeiten $t_k$ in den Ausbreitungswegen zu vergrößern, werden nicht nur die Differenzen der Empfangsfrequenzen zwischen den Empfangsfrequenzen $f_{Ek}$ mit k>1, die den ausgewählten Laufzeiten $t_k$ in den indirekten Ausbreitungswegen zugeordnet sind, und der Empfangsfrequenz $f_{E1}$, die der Laufzeit $t_1$ des direkten Ausbreitungswegs zugeordnet ist, gebildet, sondern auch die Empfangsfrequenz-Differenzen zwischen den indirekten Ausbreitungswegen selbst gebildet, so z.B. die Empfangsfrequenz-Differenz zwischen den Empfangsfrenquenzen $f_{E3}$ und $f_{E2}$, die der Schallaufzeit $t_3$ über den Ausbreitungsweg dritter Ordnung und der Laufzeit $t_2$ im Ausbreitungsweg zweiter Ordnung zugehörig sind. In entsprechender Weise werden auch die Dopplerverschiebungs-Differenzen $\Delta F_{Mk}$ zwischen den indirekten Ausbreitungswegen gebildet und in der Vergleichslogik 31 mit den entsprechenden Empfangsfrequenz-Differenzen in der beschriebenen Weise verglichen.

Für eine Verbesserung der Bestimmung der Zielposition und der Ermittlung der Geschwindigkeit des Ziels mit Mustersignalen wird das Modell im Modellblock 17 in Fig. 1 für die Bestimmung von Modell-Stauchungsfaktoren $s_k$ erweitert. Für die Berechnung der Modell-Laufzeitdifferenzen $t_{Mi}$ und der Modell-Stauchungsfaktoren $s_k$ wird Fig. 4 hinzugezogen und beispielhaft der indirekte Ausbreitungsweg k=3 mit einer Reflexion am Boden betrachtet, nachdem das Ziel S nach einem ersten Meßzeitpunkt mit einer Geschwindigkeit v in Richtung auf den Empfänger E gefahren ist und zum nächsten Meßzeitpunkt die Position S* eingenommen hat. Die Laufzeit über den direkten Ausbreitungsweg k=1 beträgt:

$$t_1 = \frac{1}{c} \sqrt{(x - v \cdot t)^2 + z_1^2} \tag{13}$$

und für den Ausbreitungsweg über den Boden

$$t_3 = \frac{1}{c} \sqrt{(x - v \cdot t)^2 + z_3^2} \tag{14}.$$

Die Modell-Laufzeitdifferenz $t_M$ beträgt

$$t_M = t_3 - t_1 = \frac{1}{c} \left[ \sqrt{(x - vt)^2 + z_1^2} - \sqrt{(x - vt)^2 + z_3^2} \right] \tag{15}.$$

Die zeitliche Änderung der Modell-Laufzeitdifferenz $t_M$ nach der Zeit t wird im Modellblock 17 berechnet und liefert den Modell-Stauchungsfaktor $s_k$ für den zweiten Meßzeitpunkt:

$$\dot{s}_k(v, t) = \frac{\partial \dot{t}_M}{\partial t} = \frac{v}{c}(x - \dot{v}t) \left[ \frac{1}{\sqrt{(x - vt)^2 + z_1^2}} - \frac{1}{\sqrt{(x - vt)^2 + z_3^2}} \right] \tag{16}.$$

Die zum ersten Meßzeitpunkt ermittelte Position des Ziels x, $z_S$ wird eingesetzt und $s_k$ für unterschiedliche Geschwindigkeiten v zusammen mit den Modell-Laufzeitdifferenz gemäß Gl. (15) $t_M$ bestimmt.

Die zeitliche Änderung der Modell-Laufzeitdifferenz gemäß Gl. (16) entspricht einer zeitlichen Änderung der Phase $\varphi$ bei einer Frequenz $\omega = 2\pi f$

$$\frac{d\varphi}{dt} = \omega \frac{\partial t_M}{\partial t} \tag{17}$$

Die zeitliche Änderung der Phase $\varphi$ ruft eine Dehnung oder Stauchung des zeitlichen Verlaufs des Gruppensignals hervor, die durch die Geschwindigkeit des Ziels entsprechend dem Dopplereffekt verursacht wird, und führt zu einer Dopplerverschiebung $\Delta\omega$ und einer Drehung der Phase $\varphi$ des komplexen Frequenzspektrums bei jeder Frequenz $\omega$ oder des zeitlichen Verlaufs des empfangenen Gruppensignals längs jedem Ausbreitungsweg. Die Dopplerverschiebung $\Delta\omega$ bezogen auf die Frequenz $\omega$ ist gleich dem Modell-Stauchungsfaktor $s_k$ und abhängig von der Geschwindigkeit v des Ziels sowie der Zeit t, in der sich das Ziel mit der Geschwindigkeit v bewegt.

$$\frac{\Delta\omega}{\omega} = \frac{\partial t_M}{\partial t} = s_k(v,t) \tag{18}$$

Ein Gruppensignal, das einen Impuls enthält, erhält über die indirekten Ausbreitungswege k>1 ebenfalls eine relative Stauchung oder Dehnung der ausgesendeten Impulslänge, die durch den Modell-Stauchungsfaktor $s_k$ berücksichtigt ist. Mit dem Modell-Stauchungsfaktor $s_k$ wird das zum ersten Meßzeitpunkt empfangene Zeitstück des Gruppensignals gestaucht und/oder gedehnt und dadurch Mustersignale hergestellt.

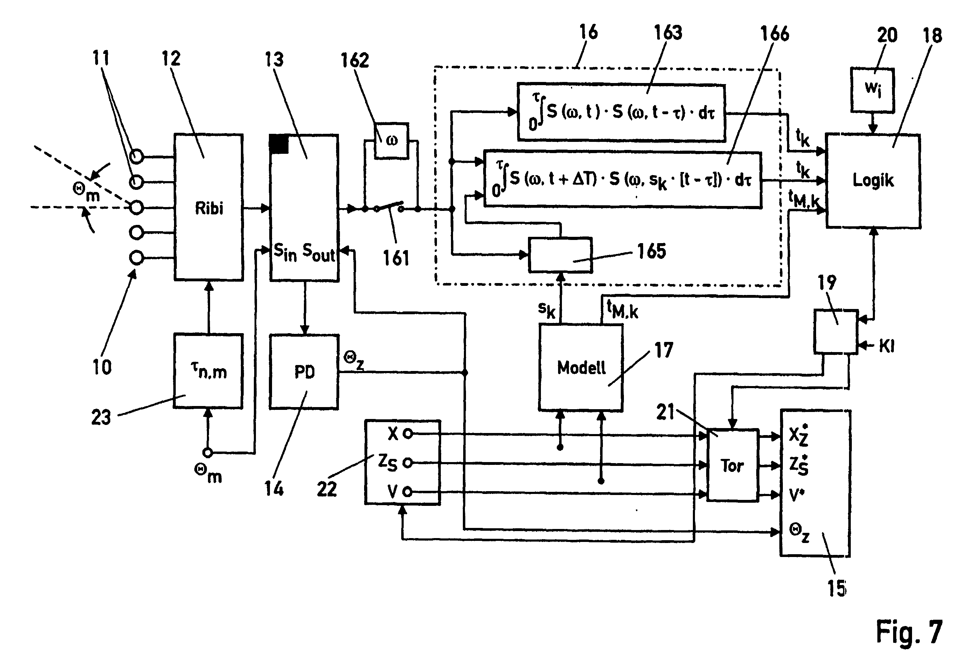

Fig. 7 zeigt ein gegenüber Fig. 1 erweitertes Blockschaltbild. Der Signalverarbeitungsblock 16 für die Laufzeitanalyse ist wahlweise durch Öffnen eines Schalters 161 über einen Bandpaß 162 der Mittenfrequenz $\omega$ mit dem Speicher 13 für die Gruppensignale am Ausgag des Richtungsbildners 12 verbunden. Das Gruppensignal wird nach Detektion eines Ziels einer Autokorrelationsschaltung 163 im Signalverarbeitungsblock 16 zugeführt, in der die Autokorrelationsfunktion des Gruppensignals gebildet und Maxima bei den Meß-Laufzeitdifferenzen $\Delta t_{1,2}$; $\Delta t_{2,3}$; $\Delta t_{1,3}$ ausgewertet werden, wie in Fig. 2 gezeigt. Die Meß-Laufzeitdifferenzen $t_{Ck}$ werden in der Vergleichslogik 18 mit den Modell-Laufzeitdifferenzen $t_{Mk}$ verglichen und ergeben die Zielposition x, $z_S$ zum ersten Meßzeitpunkt. Das Gruppensignal wird außerdem zum gleichen Meßzeitpunkt in einer Mustersignalschaltung 165 bezüglich seiner Größe und Stabilität untersucht und der zeitliche Verlauf des Gruppensignals mit dem größten Pegel und der größten Stabilität innerhalb eines Zeitintervalls $\Delta T$ abgespeichert. In dem Modellblock 17 werden Muster der Modell-Stauchungsfaktoren $s_k$ über den Modell-Laufzeitdifferenzen $t_M$ der zum nächsten Meßzeitpunkt angenommenen Zielpositionen und Geschwindigkeiten aus dem Zielpositions- und Geschwindigkeitsvorgabemodell 22 berechnet und bereitgestellt. Zur Ermittlung von Mustersignalen wird das abgespeicherte Zeitstück des Gruppensignals entsprechend den ermittelten Modell-Stauchungsfaktoren $s_k$ gestaucht oder gedehnt, beispielsweise durch unterschiedliche Auslesezeiten des abgespeicherten zeitlichen Verlaufs. Zum nächsten Meßzeitpunkt nach dem Zeitintervall $\Delta T$ wird das empfangene Gruppensignal mit den Mustersignalen aus der Mustersignalschaltung 165 in einer Kreuzkorrelationsschaltung 166 korreliert, dessen Integrationszeit $\tau$ die gleiche Länge wie die Integrationszeit in der Autokorrelationsschaltung 163 aufweist. Die bei der Kreuzkorrelation sämtlicher Mustersignale mit dem Gruppensignal ermittelten Maxima werden zum Bestimmen von Meß-Laufzeitdifferenzen $t_k$ ausgewertet und mit den Modell-Laufzeitdifferenzen $t_M$ in der Vergleichslogik 18 verglichen.

Bei Übereinstimmung werden die in dem Zielpositions- und Geschwindigkeitsvorgabemodell 22 vorgegebenen Werte für die Zielposition $x_Z^*$, $z_S^*$ und die Geschwindigkeit v* über das Tor 21 an die Anzeigevorrichtung 15 durchgeschaltet und angezeigt.

Literatur:

[1] Computational Ocean Acoustics, F. B. Jensen, W. A. Kuperman, M. B. Porter, H. Schmidt, AIP Press American Istitute of Physics, New York 1994, insbesondere S. 58,

[2] J. S. Bendat and A. G. Piersol "Engineering Applications of Correlation an spektral Analysis", John Wiley and Sons, Inc. 1993.

[3] B. Bogert, M. Healy and J. Tukey, "The quefrency alanysis of time series for echoes: Cepstrum, pseudo-autocovariance, cross-cepstrum and saphe cracking" Proc. Symposium Time Series Analysis, 1963, pages 209 - 243.

[4] Bowlin et al "Ocean Acoustics Ray-Tracing Software RAY", WHOI Technical Report, WHOI-93-10. (ftp://oalib.saic.com/pub/oalib/ray)

[5] Sound Progation in the Sea, Robert J. Urick, Peninsula Publishing, 1982, ISBN 0-932146-08-2, insbesondere S. 8 - 11

**Patentansprüche**

1. Verfahren zum Bestimmen der Zielposition eines Schall ins Wasser abstrahlenden Ziels unter Auswertung des vom Ziel abgestrahlten Schalls, der auf direktem Ausbreitungsweg und auf durch Reflexionen entstehenden indirekten Ausbreitungswegen von einem untergetauchten, zielfernen Schallempfänger (10) mit einer Anzahl von elektroakustischen Wandlern (11) empfangen wird, bei dem

   - die elektrischen Ausgangssignale der Wandler (11) richtungselektiv zu Gruppensignalen addiert werden, in den Gruppensignalen mittels Laufzeitanalyse Laufzeitdifferenzen des Schalls zwischen dem direkten Ausbreitungsweg und indirekten Ausbreitungswegen als Mess-Laufzeitdifferenzen bestimmt werden,
   - mittels eines Modells der Schallausbreitung für eine angenommene Zielposition Laufzeitdifferenzen zwischen dem direkten Ausbreitungsweg und ausgewählten indirekten Ausbreitungswegen vom Ziel zum Schallempfänger (10) als Modell-Laufzeitdifferenzen bestimmt werden,
   - die Modell-Laufzeitdifferenzen mit den Mess-Laufzeitdifferenzen verglichen werden,
   - die Bestimmung der Modell-Laufzeitdifferenzen mit jeweils geänderter Zielpositionsannahme solange wiederholt wird, bis der Vergleich der Modell-Laufzeitdifferenzen mit den Mess-Laufzeitdifferenzen einen vorgegebenen Grad der Übereinstimmung ergibt, und
   - die zum Erreichen dieses Übereinstimmungsgrads getroffene Zielpositionsannahme als echte Zielposition ausgegeben wird.

2. Verfahren nach Anspruch 1, bei dem als Kriterium beim Vergleich von Modell- und Mess-Laufzeitdifferenzen die Summe der minimalen Abstandsquadrate der Modell-Laufzeitdifferenzen zu ihren nächsten Nachbarn in der Menge der Mess-Laufzeitdifferenzen verwendet wird.

3. Verfahren nach Anspruch 2, bei dem der vorgegebene Grad der Übereinstimmung dann erreicht ist, wenn die Summe der minimalen Abstandsquadrate innerhalb eines Konfidenzintervalls liegt.

4. Verfahren nach Anspruch 2, bei dem

   - die Wahrscheinlichkeit des Aufenthalts des Ziels in der angenommenen Zielposition als Kehrwert der Summe der minimalen Abstandsquadrate ermittelt wird,
   - aus der Vielzahl der für angenommene Zielpositionen erhaltenen Wahrscheinlichkeiten die Wahrscheinlichkeitsdichte pro Flächeneinheit des Zielgebiets bestimmt wird und
   - anhand der Wahrscheinlichkeitsdichte potentielle Zielpositionen aufgesucht werden.

5. Verfahren nach einem der Ansprüche 2 - 4, bei dem die minimalen Abstandsquadrate vor der Summenbildung mit

einem Wichtungsfaktor $w_i$ multipliziert werden.

**6.** Verfahren nach Anspruch 5, bei dem
als Wichtungsfaktor $w_i$ eine Potenz der Anzahl $n_B, n_O$ der Reflexionen mit den Reflexionsfaktoren $R_B$, $R_O$ im Ausbreitungsweg i gemäß

$$w_i = R_B^{n_B} \cdot R_O^{n_O}$$

benutzt wird, wobei der Reflexionsfaktor $R_B$ für eine Reflexion am Boden (B) und der Reflexionsfaktor $R_O$ für eine Reflexion an der Oberfläche (O) eines durch Boden (B) und Oberfläche (O) begrenzten Schallkanals plausibel zwischen 0 und 1 gewählt wird.

**7.** Verfahren nach einem der Ansprüche 1 - 6, bei dem zur Laufzeitanalyse die Autorkorrelationsfunktion des Gruppensignals bestimmt wird und die Mess-Laufzeitdifferenzen durch Auswerten der Maxima der Autokorrelationsfunktion gewonnen werden.

**8.** Verfahren nach einem der Ansprüche 1 - 6, bei dem zur Laufzeitanalyse eine Cepstralanalyse auf die Gruppensignale angewendet wird und die Mess-Laufzeitdifferenzen durch die Auswertung der Maxima im Cepstrum gewonnen werden.

**9.** Verfahren nach Anspruch 1, bei dem

- zur Laufzeitanalyse eine Cepstralanalyse auf die Gruppensignale angewendet und jeweils das Cepstrum des Gruppensignals als Mess-Cepstrum gebildet wird und
- mit den Modell-Laufzeitdifferenzen ein Modell-Cepstrum gebildet und der Vergleich der Mess-Laufzeitdifferenzen und der Modell-Laufzeitdifferenzen durch unmittelbaren Vergleich des Modell-Cepstrums mit dem Mess-Cepstrum durchgeführt wird.

**10.** Verfahren nach einem der Ansprüche 1 - 9, bei dem

- als Modell ein geometrisches Modell der Schallausbreitung in einem Flachwassergebiet mit der Wassertiefe $z_W$ bei ebenem Gewässerboden und konstantem Schallgeschwindigkeitsprofil zugrunde gelegt wird,
- bei einer bekannten Tiefe $z_E$ des Schallempfängers und einer angenommenen Zieltiefe $z_S$ und einer angenommen azimutalen Zielentfernung x die Laufzeit $t_k$ für k ausgewählte Ausbreitungswege gemäß

$$t_k = \frac{1}{c} \sqrt{x^2 + z_k^2}$$

berechnet wird, wobei c die konstante Schallgeschwindigkeit und $z_k$ der Weg ist, den der Schall in jedem der k Ausbreitungswege ausschließlich in vertikaler Richtung zurücklegt, und
- zur Gewinnung der Modell-Laufzeitdifferenzen die Laufzeit ($t_1$) für den direkten Ausbreitungsweg von den Laufzeiten $t_k$ für k ausgewählte indirekte Ausbreitungswegen mit k > 1 subtrahiert wird.

**11.** Verfahren nach einem der Ansprüche 1 - 10, bei dem

- die Pegel der Gruppensignale bestimmt, durch Auswertung der größten Pegel Ziele detektiert und die Zielpeilungen bestimmt werden und
- nur in denjenigen Gruppensignalen Mess-Laufzeitdifferenzen bestimmt und mit Modell-Laufzeitdifferenzen verglichen werden, in denen ein Ziel detektiert wurde.

**12.** Verfahren nach einem der Ansprüche 1 - 11, bei dem

- mit Feststellung der echten Zielposition die mit dem Modell der Schallausbreitung bei der Bestimmung der Modell-Laufzeitdifferenzen berechneten Laufzeiten des Schalls für den direkten Ausbreitungsweg und für die ausgewählten indirekten Ausbreitungswege zur Zielposition aufgerufen werden,
- aus dem Gruppensignal, in dem das Ziel detektiert wurde, Frequenzspektren zu den den aufgerufenen Laufzeiten $t_k$ entsprechenden Zeitpunkten gebildet werden,

- aus den Frequenzspektren Empfangsfrequenzen $f_{EK}$ ausgelesen, die Differenzen der Empfangsfrequenzen $\Delta F_k$ gebildet und den aufgerufenen Laufzeiten ($t_k$) zugeordnet werden,
- für eine angenommene, vom Ziel abgestrahlte Zielfrequenz $f_0$ und für eine angenommene radiale Zielgeschwindigkeit $v_R$ zu jeder der aufgerufenen Laufzeiten $t_k$ eine Dopplerverschiebung $df_k$ berechnet und die Differenzen der Dopplerverschiebungen $df_k$ gebildet werden,
- die Empfangsfrequenz-Differenzen $\Delta F_k$ und die Dopplerverschiebungs-Differenzen $\Delta F_{Mk}$, die den gleichen Laufzeiten $t_k$ zugehörig sind, miteinander verglichen werden,
- die Berechnung der Dopplerverschiebungen $df_k$ mit jeweils geänderter Zielfrequenz $f_0$ und/oder radialer Zielgeschwindigkeit $v_R$ und der Vergleich mit den Empfangsfrequenz-Differenzen $\Delta F_k$ solange wiederholt wird, bis sich ein vorgegebener Grad der Übereinstimmung ergibt, und
- die zum Erreichen dieses Übereinstimmungsgrads getroffenen Annahmen von Zielfrequenz $f_0$ und radialer Zielgeschwindigkeit $v_R$ als wahre Zielfrequenz $f_0^*$ und wahre radiale Zielgeschwindigkeit $v^*_{R1}$ ausgeben werden.

**13.** Verfahren nach Anspruch 12, bei dem
als Kriterium beim Vergleich von Empfangsfrequenz-Differenzen $\Delta F_k$ und Dopplerverschiebungs-Differenzen $\Delta F_{Mk}$ die Summe der minimalen Abstandsquadrate der Dopplerverschiebungs-Differenzen $\Delta F_{Mk}$ zu ihren nächsten Nachbarn in der Menge der Empfangsfrequenz-Differenzen $\Delta F_k$ verwendet wird.

**14.** Verfahren nach Anspruch 13, bei dem
der vorgegebene Grad der Übereinstimmung dann erreicht ist, wenn die Summe der minimalen Abstandsquadrate innerhalb eines Konfidenzintervalls liegt.

**15.** Verfahren nach einem der Ansprüche 12 - 14, bei dem
die Dopplerverschiebung $df_1$ im direkten Ausbreitungsweg als Produkt aus angenommener Zielfrequenz $f_0$ und angenommener radialer Zielgeschwindigkeit $v_{R1}$ dividiert durch die Schallgeschwindigkeit c im Wasser und die Dopplerverschiebung $df_k$ mit k>1 für die ausgewählten indirekten Ausbreitungswege als die mit dem Verhältnis von Laufzeit $t_1$ im direkten Ausbreitungsweg und Laufzeit $t_k$ mit k>1 im jeweiligen indirekten Ausbreitungsweg multiplizierte Dopplerverschiebung $df_1$ im direkten Ausbreitungsweg berechnet wird.

**16.** Verfahren nach einem der Ansprüche 12 -15, bei dem
als Empfangsfrequenzen $f_{Ek}$ signifikante Empfangsfrequenzbänder aus den Frequenzspektren ausgelesen werden und die Zielfrequenz $f_0$ als ein vom Ziel abgestrahltes Frequenzband angenommen wird.

**17.** Verfahren nach Anspruch 16, bei dem
Harmonische der Zielfrequenz im Antriebsgeräusch zur Klassifizierung des Ziels verwendet werden.

**18.** Verfahren nach einem der Ansprüche 1 - 11 bei dem

- der zeitliche Verlauf des Gruppensignals, in dem ein Ziel detektiert und eine Zielposition x, $z_s$ zugeordnet ist, innerhalb eines Zeitintervalls $\Delta T$ gespeichert und zum Erstellen von Mustersignalen mit vorgebbaren Modell-Stauchungsfaktoren $s_k$ gedehnt und/oder gestaucht wird,
- der Modell-Stauchungsfaktor $s_k$ für jede Modell-Laufzeitdifferenz der zum nächsten Meßzeitpunkt angenommenen Position aus der ersten Zielposition und vorgebbaren Werten für die Geschwindigkeit des Ziels bestimmt wird,
- die Modell-Stauchungsfaktoren $s_k$ den Modell-Laufzeitdifferenzen $t_{Mi}$ zugeordnet werden,
- die Mustersignale mit dem zum nächsten Meßzeitpunkt in einem Zeitintervall empfangenen Gruppensignal kreuzkorreliert werden und
- die Mess-Laufzeitdifferenzen $t_k$ durch Auswerten der Maxima der Kreuzkorrelationsfunktion gewonnen und mit den Modell-Laufzeitdifferenzen $t_{Mi}$ verglichen werden und Position und Geschwindigkeit des Ziels liefern.

**19.** Verfahren nach Anspruch 18, bei dem
die erste Zielposition mit den Mess-Laufzeitdifferenzen $t_k$ aus der Auswertung der Autokorrelationsfunktion ermittelt wird.

**20.** Verfahren nach Anspruch 18 oder 19, bei dem
eine zeitabhängige relative Dopplerverschiebung längs der Ausbreitungswege aus den zu den ermittelten Mess-Laufzeitdifferenzen gehörenden Modell-Stauchungsfaktoren $s_k$ bestimmt wird.

21. Verfahren nach Anspruch 20, bei dem
aus der relativen Dopplerverschiebung $\Delta\omega/\omega$ und der Geschwindigkeit v eine Zielklassifizierung hergeleitet wird.

22. Verfahren nach Anspruch 21, bei dem
Mittenfrequenz und Bandbreite des Gruppensignals ausgewählt werden.

23. Verfahren nach Anspruch 22, bei dem
die Auswahl an die vom Ziel zu erwartende Schallabstrahlung angepasst wird.

24. Verfahren nach Anspruch 20 oder 21, bei dem
die Anpassung abhängig von der Entfernung zum Ziel und/oder zeitabhängig gewählt wird.

25. Verfahren nach einem der Ansprüche 23 - 24, bei dem die Bandbreite an eine gewünschte Entfernungsauflösung angepasst wird.

26. Verfahren nach einem der Ansprüche 18 - 25, bei dem
die Integrationszeit $\tau$ für die Kreuzkorrelationsfunktion und die Geschwindigkeitsauflösung aufeinander abgestimmt werden.

**Claims**

1. Method for determination of the target position of a target which is emitting sound into the water, by evaluation of the sound which is emitted from the target and is received on a direct propagation path and on indirect propagation paths, which are created by reflections, from a submerged sound receiver (10) which is remote from the target and has a number of electroacoustic transducers (11), in which

   - the electrical output signals from the transducers (11) are added on a directional basis to form array signals, delay time differences of the sound between the direct propagation path and indirect propagation paths are determined as measurement delay time differences by means of delay time analysis in the array signals,
   - delay time differences between the direct propagation path and selected indirect propagation paths from the target to the sound receiver (10) are determined as model delay time differences by means of a model of the sound propagation for an assumed target position,
   - the model delay time differences are compared with the measured delay time differences,
   - the determination of the model delay time differences is repeated in each case with a changed target position assumption until the comparison of the model delay time differences with the measured delay time differences results in a predetermined degree of match, and
   - the target position assumption made in order to achieve this degree of match is emitted as the real target position.

2. Method according to Claim 1, in which the sum of the minimum squares of the intervals between the model delay time differences and their nearest neighbours in the set of measured delay time differences is used as a criterion for comparison of model and measured delay time differences.

3. Method according to Claim 2, in which the predetermined degree of match is achieved when the sum of the minimum squares of the intervals is within a confidence interval.

4. Method according to Claim 2, in which

   - the probability of the target being located at the assumed target position is determined as the reciprocal of the sum of the minimum squares of the intervals,
   - the probability density per unit area of the target region is determined from the large number of probabilities obtained for the assumed target positions, and
   - potential target positions are sought on the basis of the probability density.

5. Method according to one of Claims 2 - 4, in which the minimum squares of the intervals before the formation of the sum are multiplied by a weighting factor $w_i$.

**6.** Method according to Claim 5, in which
a power of the number $n_B$, no of reflections with the reflection factors $R_B$, $R_O$ in the propagation path i is used as the weighting factor $w_i$ in accordance with

$$w_i = R_B^{n_B} \cdot R_O^{n_O}$$

where the reflection factor $R_B$ for a reflection on the bottom (B) and the reflection factor $R_O$ for a reflection on the surface (O) of a sound channel which is bounded by the bottom (B) and the surface (O) is selected plausibly between 0 and 1.

**7.** Method according to one of Claims 1 - 6, in which the autocorrelation function of the array signal is determined for delay time analysis, and the measured delay time differences are obtained by evaluation of the maxima of the autocorrelation function.

**8.** Method according to one of Claims 1 - 6, in which a cepstral analysis is applied to the array signals for delay time analysis, and the measured delay time differences are obtained by evaluation of the maxima in the cepstrum.

**9.** Method according to Claim 1, in which

- a cepstral analysis is applied to the array signals for delay time analysis, and the cepstrum of the array signal is in each case formed as the measured cepstrum, and
- a model cepstrum is formed using the model delay time differences, and the measured delay time differences and the model delay time differences are compared by direct comparison of the model cepstrum with the measured cepstrum.

**10.** Method according to one of Claims 1 - 9, in which

- the model is based on a geometric model of the sound propagation in a flat water region with the water depth $z_W$ for a flat waterway bottom and a constant speed of sound profile,
- for a known depth $z_E$ of the sound receiver and an assumed target depth $z_S$ and an assumed azimuth target range x, the delay time $t_k$ for k selected propagation paths is calculated in accordance with

$$t_k = \frac{1}{c} \sqrt{x^2 + z_k^2}$$

where $c$ is the constant speed of sound and $z_k$ is the distance which the sound travels exclusively in the vertical direction in each of the k propagation paths, and
- the model delay time differences are obtained by subtracting the delay time $(t_1)$ for the direct propagation path from the delay times $t_k$ for k selected indirect propagation paths, where k > 1.

**11.** Method according to one of Claims 1 - 10, in which

- the levels of the array signals are determined, targets are detected by evaluation of the highest levels, and the target directions are determined, and
- the measured delay time differences are determined and are compared with model delay time differences only in those array signals in which a target has been detected.

**12.** Method according to one of Claims 1 - 11, in which

- with the definition of the real target position, the delay times (calculated using the model of the sound propagation for the determination of the model delay time differences) of the sound for the direct propagation path and for the selected indirect propagation paths to the target position are called up,
- frequency spectra at the times which correspond to the called-up delay times $t_k$ are formed from the array signal in which the target was detected,
- received frequencies $f_{EK}$ are read from the frequency spectra, the differences between the received frequencies $\Delta F_k$ are formed and are associated with the called-up delay times $(t_k)$,
- a Doppler shift $df_k$ is calculated and the differences between the Doppler shifts $df_k$ are formed for an assumed

target frequency $f_0$ which is emitted from the target and for an assumed radial target velocity $v_R$ for each of the called-up delay times $t_k$,

- the received frequency differences $\Delta F_k$ and the Doppler shift differences $\Delta F_{Mk}$ which are associated with the same delay times $t_k$ are compared with one another,
- the calculation of the Doppler shifts $df_k$ is repeated with a different target frequency $f_0$ in each case and/or with a different radial target velocity $v_R$ in each case, and the comparison with the received frequency differences $\Delta F_k$, are repeated until a predetermined degree of match is found, and
- the assumptions of the target frequency $f_0$ and radial target velocity $v_R$ which were made in order to achieve this degree of match are emitted as the true target frequency $f_0^*$ and the true radial target velocity $v^*_{R1}$.

**13.** Method according to Claim 12, in which

the sum of the minimum squares of the intervals between the Doppler shift differences $\Delta F_{Mk}$ and their closest neighbours in the set of received frequency differences $\Delta F_k$ is used as a criterion for comparison of received frequency differences $\Delta F_k$ and Doppler shift differences $\Delta F_{Mk}$.

**14.** Method according to Claim 13, in which

the predetermined degree of match is reached when the sum of the minimum squares of the intervals is within a confidence interval.

**15.** Method according to one of Claims 12 - 14, in which the Doppler shift $df_1$ on the direct propagation path is calculated as the product of the assumed target frequency $f_0$ and the assumed radial target velocity $v_{R1}$ divided by the speed of sound c in the water, and the Doppler shift $df_k$, where k is greater than unity, is calculated for the selected indirect propagation paths as the Doppler shift $df_1$ on the direct propagation path multiplied by the ratio of the delay time $t_1$ on the direct propagation path and the delay time $t_k$, where k is greater than unity, on the respective indirect propagation path.

**16.** Method according to one of Claims 12 - 15, in which significant received frequency bands are read from the frequency spectra as received frequencies $f_{Ek}$, and the target frequency $f_0$ is assumed to be a frequency band which is emitted from the target.

**17.** Method according to Claim 16, in which harmonics of the target frequency in the propulsion noise are used for classification of the target.

**18.** Method according to one of Claims 1 - 11, in which

- the time profile of the array signal in which a target is detected and in which a target position x, $z_s$ is allocated within a time interval $\Delta T$ is stored, and is expanded and/or compressed in order to create pattern signals, using model compression factors $s_k$ which can be predetermined,
- the model compression factor $s_k$ for each model delay time difference for the position which is assumed for the next measurement time is determined from the first target position and values, which can be predetermined, for the velocity of the target,
- the model compression factors $s_k$ are associated with the model delay time differences $t_{Mi}$,
- the pattern signals are cross-correlated with the array signal received in a time interval relating to the next measurement time, and
- the measure delay time differences $t_k$ are obtained by evaluation of the maxima of the cross-correlation function, are compared with the model delay time differences $t_{Mi}$, and produce the position and velocity of the target.

**19.** Method according to Claim 18, in which the first target position is determined using the measured delay time differences $t_k$ from evaluation of the autocorrelation function.

**20.** Method according to Claim 18 or 19, in which a time-dependent relative Doppler shift along the propagation paths is determined from the model compression factors $s_k$ which are associated with the determined measured delay time differences.

**21.** Method according to Claim 20, in which a target classification is derived from the relative Doppler shift $\Delta\omega/\omega$ and the velocity v.

**22.** Method according to Claim 21, in which the mid-frequency and bandwidth of the array signal are selected.

**23.** Method according to Claim 22, in which the selection is matched to the sound emission to be expected from the target.

**24.** Method according to Claim 20 or 21, in which the matching is selected as a function of the range to the target, and/or as a function of time.

**25.** Method according to one of Claims 23 - 24, in which the bandwidth is matched to the desired range resolution.

**26.** Method according to one of Claims 18 - 25, in which the integration time $\tau$ for the cross-correlation function and for the velocity resolution are matched to one another.

**Revendications**

**1.** Procédé pour déterminer la position d'une cible émettant du son dans de l'eau en évaluant le son émis par la cible, qui est reçu par voie de propagation directe, et par des voies de propagation indirectes produites par des réflexions, par un récepteur acoustique immergé (10) éloigné de la cible, équipé d'un certain nombre de transducteurs électroacoustiques (11), selon lequel

- les signaux électriques de sortie des transducteurs (11) sont additionnés de façon directionnellement sélective en signaux de groupe, et dans les signaux de groupe, on détermine au moyen d'une analyse de temps de parcours, en tant que différences mesurées de temps de parcours, des différences de temps de parcours du son entre la voie de propagation directe et des voies de propagation indirectes,
- au moyen d'un modèle de propagation du son pour une position supposée de la cible, on détermine, en tant que différences modélisées de temps de parcours, des différences de temps de parcours entre la voie de propagation directe et des voies de propagation indirectes sélectionnées entre la cible et le récepteur acoustique (10),
- les différences modélisées de temps de parcours sont comparées aux différences mesurées de temps de parcours,
- la détermination des différences modélisées de temps de parcours, avec une hypothèse chaque fois modifiée de position de la cible, est répétée jusqu'à ce que la comparaison des différences modélisées de temps de parcours avec les différences mesurées de temps de parcours fournisse un degré prédéfini de concordance, et
- l'hypothèse de position de la cible prise pour atteindre ce degré de concordance est éditée comme position vraie de la cible.

**2.** Procédé selon la revendication 1, selon lequel on utilise comme critère pour la comparaison des différences modélisées et mesurées de temps de parcours la somme des carrés minimaux de distance des différences modélisées de temps de parcours avec leurs plus proches voisines dans l'ensemble des différences mesurées de temps de parcours.

**3.** Procédé selon la revendication 2, selon lequel le degré prédéfini de concordance est atteint lorsque la somme des carrés minimaux de distance se situe à l'intérieur d'un intervalle de confiance.

**4.** Procédé selon la revendication 2, selon lequel

- on détermine la probabilité de séjour de la cible dans la position supposée de la cible en tant que valeur inverse de la somme des carrés minimaux de distance,
- à partir de la multiplicité des probabilités obtenues pour des positions supposées de la cible, on détermine la densité de probabilité par unité de surface de la zone de la cible, et .
- à l'aide de la densité de probabilité, on recherche des positions potentielles de la cible.

**5.** Procédé selon l'une des revendications 2 à 4, selon lequel les carrés minimaux de distance sont multipliés, avant de former la somme, par un facteur de pondération $w_i$.

**6.** Procédé selon la revendication 5, selon lequel on utilise comme facteur de pondération $w_i$ une puissance du nombre $n_B$, $n_O$ de réflexions avec les facteurs de réflexion $R_B$, $R_O$ dans la voie de propagation i, conformément à l'équation suivante

$$w_i = R_B{}^{n_B} \cdot R_o{}^{n_o} ,$$

le facteur de réflexion $R_B$ pour une réflexion sur le fond (B) et le facteur de réflexion $R_o$ pour une réflexion sur la surface (O) d'un canal acoustique délimité par le fond (B) et la surface (O) étant choisis d'une manière plausible entre 0 et 1.

**7.** Procédé selon l'une des revendications 1 à 6, selon lequel, pour l'analyse de temps de parcours, on détermine la fonction d'autocorrélation du signal de groupe, et les différences mesurées de temps de parcours sont obtenues par évaluation des maxima de la fonction d'autocorrélation.

**8.** Procédé selon l'une des revendications 1 à 6, selon lequel, pour l'analyse de temps de parcours, on applique une analyse cepstrale aux signaux de groupe, et les différences mesurées de temps de parcours sont obtenues par l'évaluation des maxima dans le cepstre.

**9.** Procédé selon la revendication 1, selon lequel

- pour l'analyse de temps de parcours, on applique une analyse cepstrale aux signaux de groupe, et on forme chaque fois le cepstre du signal de groupe comme cepstre mesuré, et
- on forme avec les différences modélisées de temps de parcours un cepstre modélisé, et on effectue la comparaison des différences mesurées de temps de parcours et des différences modélisées de temps de parcours par comparaison directe du cepstre modélisé avec le cepstre mesuré.

**10.** Procédé selon l'une des revendications 1 à 9, selon lequel

- comme modèle, on se base sur un modèle géométrique de la propagation du son dans une zone de hauts fonds de profondeur d'eau $z_w$, avec un fond marin plat et un profil constant de vitesse du son,
- pour une profondeur connue $z_E$ du récepteur acoustique, une profondeur supposée $z_s$ de la cible et une distance azimutale supposée x de la cible, on calcule le temps de parcours $t_k$ pour k voies de propagation sélectionnées conformément à l'équation suivante

$$t_k = (1/c) \sqrt{x^2 + z_K{}^2} ,$$

où c est la vitesse constante du son et $z_k$ le chemin qu'accomplit le son exclusivement en direction verticale dans chacune des k voies de propagation, et
- pour obtenir les différences modélisées de temps de parcours, on soustrait le temps de parcours ($t_1$) pour la voie de propagation directe des temps de parcours $t_k$ pour k voies de propagation indirectes sélectionnées, avec k > 1.

**11.** Procédé selon l'une des revendications 1 à 10, selon lequel

- on détermine le niveau des signaux de groupe, on détecte des cibles par évaluation des plus grands niveaux et on détermine les relèvements des cibles, et
- on détermine les différences mesurées de temps de parcours, et on les compare aux différences modélisées de temps de parcours, uniquement dans les signaux de groupe dans lesquels une cible a été détectée.

**12.** Procédé selon l'une des revendications 1 à 11, selon lequel

- avec l'établissement de la position vraie de la cible, on appelle pour la position de la cible les temps de parcours, calculés avec le modèle de propagation du son lors de la détermination des différences modélisées de temps de parcours, du son pour la voie de propagation directe et pour les voies de propagation indirectes sélectionnées,
- à partir du signal de groupe dans lequel la cible a été détectée, on forme des spectres de fréquence pour les instants correspondants aux temps de parcours $t_k$ appelés,
- à partir des spectres de fréquence, on extrait des fréquences de réception $f_{EK}$, on forme les différences $\Delta F_k$ des fréquences de réception, et on les associe aux temps de parcours ($t_k$) appelés,
- pour une fréquence de cible $f_o$ supposée, émise par la cible, et pour une vitesse radiale supposée $v_R$ de la cible, on calcule pour chacun des temps de parcours $t_k$ appelés un déplacement Doppler $df_k$, et on forme les différences des déplacements Doppler $df_k$,

- on compare entre elles les différences $\Delta F_k$ de fréquence de réception et les différences $\Delta F_{Mk}$ de déplacement Doppler qui sont associées aux mêmes temps de parcours $t_k$,
- le calcul des déplacements Doppler $df_k$ avec une fréquence de cible $f_o$ et/ou une vitesse radiale de cible $v_R$ chaque fois modifiée, et la comparaison avec les différences $\Delta F_k$ de fréquence de réception, sont répétés jusqu'à ce qu'on obtienne un degré prédéfini de concordance, et
- les hypothèses, prises pour atteindre ce degré de concordance, de fréquence de cible $f_o$ et de vitesse radiale de cible $v_R$ sont éditées comme fréquence vraie $f_o^*$ de la cible et comme vitesse radiale vraie $v^*_{R1}$ de la cible.

13. Procédé selon la revendication 12, selon lequel, comme critère lors de la comparaison des différences $\Delta F_k$ de fréquence de réception et les différences $\Delta F_{Mk}$ de déplacement Doppler, on utilise la somme des carrés minimaux de distance des différences $\Delta F_{Mk}$ de déplacement Doppler avec leurs plus proches voisines dans l'ensemble des différences $\Delta F_k$ de fréquence de réception.

14. Procédé selon la revendication 13, selon lequel le degré prédéfini de concordance est atteint lorsque la somme des carrés minimaux de distance se situe à l'intérieur d'un intervalle de confiance.

15. Procédé selon l'une des revendications 12 à 14, selon lequel le déplacement Doppler $df_1$ dans la voie de propagation directe est calculé comme étant le produit de la fréquence de cible supposée $f_o$ et de la vitesse radiale de cible supposée $v_{R1}$, divisé par la vitesse $c$ du son dans l'eau, et le déplacement Doppler $df_k$ avec $k>1$ pour les voies de propagation indirectes sélectionnées est calculé comme étant le déplacement Doppler $df_1$ dans la voie de propagation directe, multiplié par le rapport du temps de parcours $t_1$ dans la voie de propagation directe et du temps de parcours $t_k$ avec $k>1$ dans la voie de propagation indirecte respective.

16. Procédé selon l'une des revendications 12 à 15, selon lequel, comme fréquences de réception $f_{Ek}$, des bandes significatives de fréquence de réception sont extraites des spectres de fréquence, et on prend comme hypothèse la fréquence de cible $f_o$ en tant que bande de fréquence émise par la cible.

17. Procédé selon la revendication 16, selon lequel on utilise pour la classification de la cible les harmoniques de la fréquence de cible dans le bruit d'entraînement.

18. Procédé selon l'une des revendications 1 à 11, selon lequel

- on mémorise à l'intérieur d'un intervalle de temps $\Delta T$ l'allure dans le temps du signal de groupe dans lequel une cible est détectée et associée à une position de cible x, $z_s$, et pour établir des signaux de référence, on l'étend et/ou on l'écrase avec des facteurs prédéfinissables $s_k$ d'écrasement de modélisation,
- on détermine le facteur $s_k$ d'écrasement de modélisation, pour chaque différence modélisée de temps de parcours de la position supposée à l'instant de mesure suivant, à partir de la première position de la cible et de valeurs prédéfinissables pour la vitesse de la cible,
- on associe les facteurs $s_k$ d'écrasement de modélisation aux différences modélisées de temps de parcours $t_{Mi}$,
- on effectue une corrélation croisée des signaux de référence avec le signal de groupe reçu à l'instant de mesure suivant dans un intervalle de temps, et
- les différences mesurées de temps de parcours $t_k$ sont obtenues par évaluation des maxima de la fonction de corrélation croisée et comparées aux différences modélisées de temps de parcours $t_{Mi}$, et fournissent la position et la vitesse de la cible.

19. Procédé selon la revendication 18, selon lequel la première position de la cible est déterminée avec les différences mesurées de temps de parcours $t_k$ à partir de l'évaluation de la fonction d'autocorrélation.

20. Procédé selon la revendication 18 ou 19, selon lequel on détermine, à partir des facteurs $s_k$ d'écrasement de modélisation associés aux différences modélisées de temps de parcours déterminées, un déplacement Doppler relatif en fonction du temps le long des voies de propagation.

21. Procédé selon la revendication 20, selon lequel on déduit, à partir du déplacement Doppler relatif $\Delta\omega/\omega$ et de la vitesse v, une classification de la cible.

22. Procédé selon la revendication 21, selon lequel on sélectionne la fréquence centrale et la largeur de bande du signal de groupe.

**23.** Procédé selon la revendication 22, selon lequel la sélection est adaptée au rayonnement acoustique à attendre de la cible.

**24.** Procédé selon la revendication 20 ou 21, selon lequel l'adaptation est choisie en fonction de la distance de la cible et/ou en fonction du temps.

**25.** Procédé selon l'une des revendications 23 - 24, selon lequel la largeur de bande est adaptée à une résolution de distance souhaitée.

**26.** Procédé selon l'une des revendications 18 à 25, selon lequel la résolution de vitesse et le temps d'intégration $\tau$ pour la fonction de corrélation croisée sont mutuellement accordés.

Fig. 1

Fig. 2

Fig. 3

$$t_k \cdot c = \sqrt{x^2 + Z_k^2}$$

für  k = 1:  $Z_1 = Z_S - Z_E$        (Direkt)

k = 2:  $Z_2 = Z_S + Z_E$        (0)

k = 3:  $Z_3 = 2Z_W - Z_S - Z_E$        (B)

k = 4:  $Z_4 = 2Z_W + Z_S - Z_E$        (0B)

k = 5:  $Z_5 = 2Z_W - Z_S + Z_E$        (B0)

# Fig. 4

Fig. 5

Fig. 6

EP 1 271 175 B1

Fig. 7

EP 1 271 175 B1